# FASCICULE DE BREVET EUROPEEN

(11) **EP 2 559 224 B1**
(45) Date de publication et mention de la délivrance du brevet: **19.07.2017**
(21) Numéro de dépôt: 11719856.4
(22) Date de dépôt: 14.04.2011
(51) Int. Cl.: H04L 29/08, G06F 9/50, H04L 12/24

(54) **OUTIL DE GESTION DE RESSOURCES ET D'INFRASTRUCTURES INFORMATIQUES ET DE RÉSEAUX**
WERKZEUG ZUR VERWALTUNG VON RESSOURCEN, COMPUTERINFRASTRUKTUREN UND NETZWERKEN
TOOL FOR MANAGING RESOURCES AND COMPUTER INFRASTRUCTURES AND NETWORKS

(30) Priorité: 16.04.2010 FR 1001624
(43) Date de publication de la demande: 20.02.2013
(73) Titulaire: F5 Networks, Inc, Seattle, WA 98119 (US)
(72) Inventeur: VICAT-BLANC PRIMET, Pascale, F-69004 Lyon (FR); SOUDAN, Sébastien, F-69008 Lyon (FR)
(74) Mandataire: Lavoix
(86) Numéro de dépôt international: PCT/FR2011/050858
(87) Numéro de publication internationale: WO 2011/128594

(56) Documents cités:
- US-A1- 2008 192 773
- SOUDAN S ET AL: "Flow scheduling and endpoint rate control in GridNetworks", FUTURE GENERATIONS COMPUTER SYSTEMS, ELSEVIER SCIENCE PUBLISHERS. AMSTERDAM, NL, vol. 25, no. 8, 30 septembre 2009 (2009-09-30), pages 904-911, XP026144374, ISSN: 0167-739X, DOI: DOI:10.1016/J.FUTURE.2008.06.006 [extrait le 2008-07-03] cité dans la demande
- CHEN B B ET AL: "Supporting Bulk Data Transfers of High-End Applications with Guaranteed Completion Time", PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 1 juin 2007 (2007-06-01), pages 575-580, XP031125733, ISBN: 978-1-4244-0353-0 -& W. REINHARDT: "Advance Reservation of Network Resources for Multimedia Applications", , 31 décembre 1994 (1994-12-31), pages 1-11, XP002625102, ProceedingIWACA '94 Proceedings of the Second International Workshop on Multimedia: Advanced Teleservices and High-Speed Communication Architectures Extrait de l'Internet: URL:http://citeseerx.ist.psu.edu/viewdoc/d ownload?doi=10.1.1.42.1402&rep=rep1&type=p df [extrait le 2011-02-25]

## Description

L'invention concerne les réseaux et les équipements informatiques de transmission et/ou de traitement de l'information numérique. L'invention concerne en particulier les réseaux étendus exploités grâce au protocole "IP" (pour "Internet Protocol" ou "protocole Internet" en français).

Les réseaux et les systèmes informatiques sont conçus et exploités de manière très différente les uns des autres.

Les réseaux informatiques sont usuellement partagés simplement c'est-à-dire sans aucun contrat particulier, ni offre de garantie, de performances notamment. Les systèmes de calcul ou de stockage, et plus généralement les systèmes dits "d'extrémité", quant à eux, restent privés et physiquement isolés, à tout le moins pour ce qui est de leur fonction propre.

Il n'existe à ce jour aucune possibilité de garantir un niveau de performance, ou de puissance, qui pourrait dès lors être offert à un utilisateur pour la jouissance d'un ensemble de ressources, réseau ou d'extrémité, éventuellement combinées, par exemple par l'intermédiaire d'un contrat de location.

À la base, les réseaux étendus utilisent principalement la transmission de l'information sous la forme de paquets formatés et acheminés selon le protocole internet. Le service offert par ce protocole Internet est du type dit "best effort", ou "on fait de son mieux" en français. Le protocole Internet prévoit l'acheminement au mieux de l'infomation (ou "best effort delivery" en anglais), compte tenu des ressources de communication, en particulier les liens et les passerelles, et des ressources informatiques disponibles dans le réseau.

Certains applications des réseaux étendus nécessitent des garanties de délai et/ou de débit d'arrivée de l'information. Dans le cas de la diffusion vidéo ou de musique, par exemple, l'information est transmise sous la forme d'un signal échantillonné à une fréquence fixe, et ce signal doit être reconstruit et restitué au récepteur à cette même fréquence. Bien que ces applications puissent s'accommoder dans une certaine mesure de variations du délai et/ou du débit d'acheminement, elles exigent néanmoins un délai d'acheminement borné (du même ordre de grandeur que la période d'échantillonnage du signal émis) et un débit d'acheminent minimal pour que le récepteur bénéficie de la qualité et de la fluidité de l'information telle que diffusée (émise).

En pareil cas, la transmission "au mieux" n'est pas véritablement satisfaisante.

Il est possible de construire dans un réseau étendu ce que l'on appelle un réseau privé virtuel. Dans ce cas, une partie des capacités de transmission peut être dédiée au réseau privé virtuel. La capacité ainsi mobilisée pour le réseau privé virtuel est généralement supérieure à ses besoins réels: les capacités intrinsèques du lien réseau privé, notamment sa bande bande-passante, peuvent être supérieures aux besoins, et/ou il existe des périodes de temps pendant lesquelles ce lien privé virtuel n'est pas utilisé. Il en résulte que la capacité totale de transmission du réseau étendu, y compris dans sa dimension temporelle, est mal utilisée.

On assiste par ailleurs à un usage généralisé des réseaux de type Internet. Il est donc souhaitable de faire en sorte que tous les types de données puissent transiter sur de tels réseaux, que ce soient des données s'accommodant de l'approche "best effort", ou bien, au contraire, de données qui nécessitent des garanties de performance quant au débit et/ou délai de transmission. C'est là un enjeu de ce que l'on appelle parfois "l'internet du futur".

US 2008/192773 A1 décrit une technique de gestion de l'utilisation de la bande passante dans un réseau d'accès, telle que sur la base d'une utilisation d'un trajet de communication entre un multiplexeur d'accès et un réseau de services, un premier profil de bande passante est établi pour une première connexion entre le multiplexeur d'accès et un premier dispositif utilisateur, et un deuxième profil de bande passante est établi pour une deuxième connexion entre le multiplexeur d'accès et un deuxième dispositif utilisateur.

« Supporting Bulk Data Transfers of High-End Applications with Guaranteed Completion Time », Chen et al., propose une technique de réservation de ressources, flexible et dite « multi-intervalles », qui divise une fenêtre active de transfert en de multiples sous-intervalles.

L'invention vient améliorer la situation à cet égard en proposant un outil d'aide à la gestion d'un équipement physique communicant possédant des capacités de traitement, de stockage, et/ou de transmission d'informations numériques, comprenant :
- un contrôleur d'équipement capable de faire opérer l'équipement physique conformément à un jeu de paramètres de fonctionnement ;
- un stockage de données agencé selon une structure qui met en relation un identifiant pour l'équipement physique et, d'une part, un jeu de valeurs datées d'attributs, et, d'autre part, une liste de fonctions de commande capables de modifier certains au moins des paramètres de fonctionnement du contrôleur ;
- un interpréteur adapté pour recevoir en même temps une donnée d'identifiant d'équipement et un paramètre d'horizon temporel, et pour y répondre en établissant une suite d'événements respectifs à partir des informations du stockage de données concernées par l'horizon temporel, chaque événement mettant en relation une date, un ou plusieurs identifiants de fonctions de commande et un jeu de paramètres pour ces fonctions, établis d'après une valeur datée d'attribut ;
- un séquenceur agencé pour appeler l'interpréteur et réaliser chronologiquement les appels des fonctions de chaque événement de la suite telle que retournée par interpréteur.

Des caractéristiques optionnelles de l'invention, complémentaires ou de substitution sont énoncées ci-après.

La structure du stockage de données met en relation l'identifiant pour l'équipement physique avec en outre un identifiant unifié de classe fonctionnelle, et le jeu de valeurs datées d'attributs comprend un jeu daté de données quantitatives de capacité maximale en rapport avec l'identifiant de classe fonctionnelle.

La liste de fonctions de commande comprend au moins une fonction capable de modifier des données quantitatives de capacité maximale.

La structure du stockage de données met en relation l'identifiant pour équipement physique avec en outre un identifiant unifié de classe fonctionnelle, le jeu de valeurs datées d'attributs comprend un jeu daté de données quantitatives de capacité réservée en rapport avec l'identifiant de classe fonctionnelle, et une seconde structure de données met en relation ces données de capacité réservée et un identifiant d'infrastructure réseau.

Le jeu de valeurs datées d'attributs comprend des valeurs datées d'attributs non fonctionnels relatifs à la sécurité, la performance, la localisation géographique, au coût monétaire, au coût énergétique de équipement, à la propriété, à la fiabilité, et/ou à la surveillance de performances.

L'interpréteur, le séquenceur, et le contrôleur sont reliés à un dispositif de synchronisation.

Le dispositif de synchronisation comprend un élément au moins du groupe formé d'une horloge globale de type GPS, d'un serveur NTP, d'une horloge globale distribuée, construite et resynchronisée à partir d'une source temporelle physique.

L'invention vise également un outil d'aide à la gestion d'un réseau d'équipements physiques communicants possédant des capacités de traitement, de stockage, et/ou de transmission d'informations numériques, comprenant :
- un contrôleur d'équipement respectif capable de faire opérer l'équipement physique conformément à un jeu de paramètres de fonctionnement ;
- un stockage de données agencé selon une structure qui met en relation un identifiant pour chaque équipement physique et, d'une part, un jeu de valeurs datées d'attributs, et, d'autre part, une liste de foncions de commande capables de modifier certains au moins des paramètres de fonctionnement du contrôleur de cet équipement ;
- un interpréteur adapté pour recevoir en même temps une donnée d'identifiant d'équipement et un paramètre d'horizon temporel, et pour y répondre en établissant une suite d'événements respectifs à partir des informations du stockage de données concernées par l'horizon temporel, chaque événement mettant en relation une date, un ou plusieurs identifiants de fonctions de commande et un jeu de paramètres pour ces fonctions, établis d'après une valeur datée d'attribut ;
- au moins un séquenceur agencé pour appeler l'interpréteur et réaliser chronologiquement les appels des fonctions de chaque événement de la suite telle que retournée par l'interpréteur.

Le stockage de données et/ou l'interpréteur peuvent être communs plusieurs équipements dudit réseau.

Chaque contrôleur peut être réalisé au moins en partie sous la forme d'un démon.

D'autres caractéristiques et avantages de l'invention apparaîtront à l'examen de la description détaillée ci-après, et des dessins annexés, sur lesquels :
- la figure 1 représente physiquement une infrastructure de manipulation d'informations ;
- la figure 2 représente physiquement une autre infrastructure de manipulation d'informations ;
- la figure 3 représente deux noeuds d'une infrastructure de manipulation d'informations ;
- la figure 4 représente l'infrastructure de la figure 2, modifiée selon un aspect de l'invention ;
- la figure 5A représente physiquement un ensemble d'infrastructures de manipulation d'information, complété selon un autre aspect de l'invention ;
- la figure 5B représente une partie de l'infrastructure de la figure 5A sous une forme virtualisée ;
- les figures 6A à 6E représentent des équipements de manipulation d'information à usage dans les infrastructures des figures 4, 5A ou 5B par exemple ;
- la figure 7 représente un profil capacitif d'une ressource de manipulation d'information ;
- la figure 8 est analogue à la figure 7 pour une autre ressource de manipulation d'information ;
- la figure 9 représente un digramme fonctionnel pour une partie du gestionnaire d'infrastructure de la ligure 4 ;
- la figure 10 est analogue à la figure 9, pour une autre partie du gestionnaire ;
- la figure 11 est un graphique illustrant un profil d'une ressource de l'infrastructure de la figure 4 et une série d'événements temporels correspondants ;
- la figure 12 est un ordinogramme illustrant le traitement de réservation de la figure 9 ;
- la figure 13 est un ordinogramme détaillant l'opération 960 de la figure 12 ;
- la figure 14 est un ordinogramme détaillant l'opération 970 de la figure 12 ;
- la figure 15 est un ordinogramme illustrant l'exploitation d'une série temporelle au sein d'une ressource de l'infrastructure de la figure 4 ;
- la figure 16 est un ordinogramme illustrant le fonctionnement d'un gestionnaire d'infrastructure virtuelles ;
- la figure 17 illustre un dispositif d'évaluation de requête ;
- la figure 18 est un ordinogramme illustrant une fonction d'un outil du dispositif de la figure 17 ;
- la figure 19 est un ordinogramme illustrant une autre fonctions de l'outil de la figure 18 ;

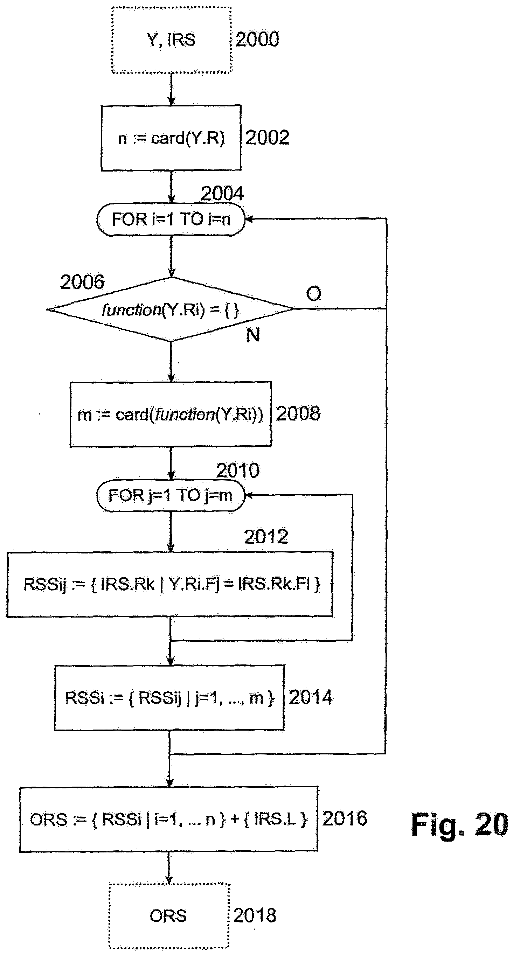

- la figure 20 est un ordinogramme illustrant le fonctionnement d'un autre outil du dispositif de la figure 17 ;
- les figures 21, 22 et 23 sont des ordinogrammes illustrant respectivement des fonctions différentes d'un autre outil encore du dispositif de la figure 17 ;
- les figures 24 à 27 sont des ordinogrammes illustrant respectivement des fonctions d'un autre outil encore du dispositif de la figure 17 ;
- la figure 28 est un schéma d'un modèle conceptuel de données pour l'outil de l'invention ;
- la figure 29 est un schéma illustrant l'initialisation de l'outil selon l'invention.

En outre, la description détaillée est augmentée des annexes suivantes :
- l'annexe 1 illustre un exemple de structures de donnés utilisables pour la mise en oeuvre de l'invention ;
- l'annexe 2 définit un ensemble de fonction à usage dans l'invention.

Ces annexes sont parties intégrante de la description, et pourront donc non seulement servir à mieux faire comprendre la présente invention, mais aussi contribuer à sa définition, le cas échéant. Ceci s'applique également en tous points aux dessins.

Le présent document peut contenir des éléments susceptibles d'une projection par droit d'auteur ou copyright. Le titulaire des droits n'a pas d'objection à la reproduction à l'identique par quiconque de ce document de brevet, tel qu'il apparaît dans les dossiers et/ou publications des offices de brevet. Par contre, il réserve pour le reste l'intégralité de ses droits d'auteur et/ou de copyright.

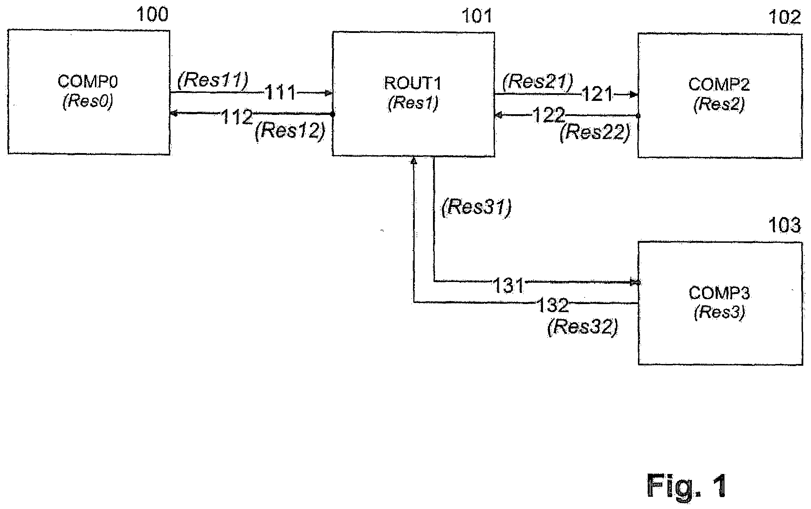

La figure 1 fait apparaître trois ordinateurs 100, 102 et 103, également notés "COMP0", "COMP2" et "COMP3", interconnectés par l'intermédiaire d'un routeur 101, également noté "ROUT1". L'ordinateur COMP0 100 est interconnecté avec le routeur ROUT1 101 par un lien bidirectionnel, dont les directions sont décomposées en un lien aller 111, de COMP0 vers ROUT1, et un lien retour 112, de ROUT1 vers COMP0. De même, le routeur ROUT1 101 est interconnecté avec l'ordinateur COMP2 102 par un lien aller 121, de ROUT1 vers COMP2, et un lien retour 122, de COMP2 vers ROUT1. Le routeur ROUT1 101 est en outre interconnecté avec l'ordinateur COMP3 103 par un lien aller 131, de ROUT1 à COMP3, et un lien retour 132, de COMP3 à ROUT1.

On peut utiliser le mot "are" pour le mot "lien".

Les liens allers et/ou retours peuvent être, au moins en partie, des liens Internet.

Chacun des éléments qui viennent d'être décrits en relation avec la figure 1 est considéré comme une ressource. Sont ainsi des ressources :
- l'ordinateur COMB0 100, ou ressource "Res0";
- le routeur ROUT1 101, ou ressource "Res1";
- l'ordinateur COMP2 102, ou ressource "Res2";
- l'ordinateur COMP3 103, ou ressource "Res3";
- le lien aller 111, ou ressource "Res11", affecté au point source, c'est-à-dire l'ordinateur COMP0 100;
- le lien retour 112, affecté en tant que ressource "Res12" au routeur ROUT1 101;
- le lien aller 121, affecté en tant que ressource "Res21" au routeur ROUT1 101;
- le lien retour 122, affecté en tant que ressource "Res22" à l'ordinateur COMP2 102;
- le lien aller 131, affecté en tant que ressource "Res31" au routeur ROUT1 101;
- le lien retour 132, affecté en tant que ressource "Res32" à l'ordinateur COMP3 103.

La figure 1 est présentée comme un système réduit, dans lequel l'invention peut commencer àse manifester. Il est clair qu'un réseau étendu comprendra beaucoup plus de ressources. Mais elles resteront, au moins en partie, traitées comme cela est décrit à propos de la figure 1.

Par ailleurs, les éléments tels que les ordinateurs ou le routeur de la figure 1 sont souvent appelés "noeuds" lorsqu'on les considère comme interconnectés en réseau. Ainsi, dans un réseau, un noeud peut être un ordinateur, un routeur, un commutateur, un système de stockage, un modem ou encore un système de visualisation, un système d'acquisition de données ou encore un sous-réseau de capteurs. Ces noeud sont interconnectés par des liens réseau, généralement bidirectionnels, comme vu plus haut.

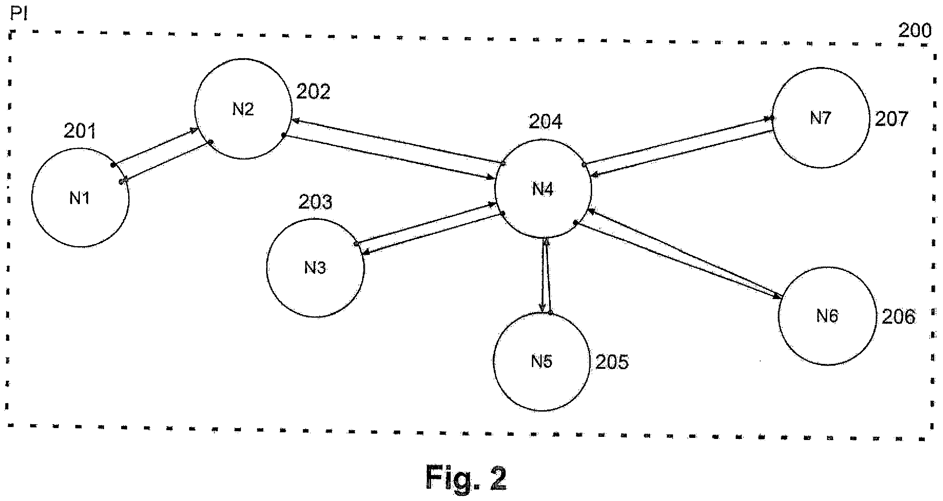

La figure 2 montre schématiquement un exemple simple de ce que l'on appelle aujourd'hui une "infrastructure physique étendue". Cette infrastructure physique, désignée ci-après infrastructure PI 200, fait apparaître un noeud 201, désigné N1, interconnecté à un noeud 202, désigné N2, par l'intermédiaire d'un lien aller 2012, désignée L12, er d'un lien retour 2021, désigné L21. Le noeud N2 202 est lui-même interconnecté à un noeud 204, désigné N4, par l'intermédiaire d'un lien aller 2024, référencé L24, et d'un lien retour 2042, référence L42.

Au noeud N4 204 sont également interconnectés les noeud désignés N3 203, N5 205, N6 206 et N7 207, respectivement par l'intermédiaire de liens allers L34 2034, L54 2054, L64 2064, L74 2074 et de liens retours L43 2043, L45 2045, L46 2046, L47 2047.

L'ensemble des noeud Ni et des liens Li qui les relient entre eux constitue l'infrastructure PI 200. Cette infrastructure PI 200 est délimitée par un cadre en trait tireté épais sur la figure 2. Ici, les noeud sont des ordinateurs pour la plupart. Toutefois, dans l'exemple, le noeud N4 peut être un ordinateur, un routeur ou un serveur.

Il est présumé ici qu'un noeud Ni correspond â une unité physique de l'infrastructure PI200 (un ordinateur ou un routeur par exemple), les liens étant principalement des liens réseaux, y compris des liens Internent, le cas échéant.

La nature exacte d'un noeud et de ses liens dépend de la finesse de la décomposition de l'infrastructure physique : dans une représentation plus fine, un noeud pourrait être constitué d'une unité fonctionnelle d'un ordinateur (disque, unité de traitement), tandis que, dans une représentation plus brossière, un noeud pourrait être constitué d'un sous-réseau, par exemple.

D'autre part, la finesse de la décomposition peut être différente selon les noeud de l'infrastructure : un noeud particulier peut être constitué de l'ensemble d'un sous-réseau tandis qu'un noeud différent de la même infrastructure peut être uniquement constitué d'un ordinateur individuel d'un autre sous-réseau.

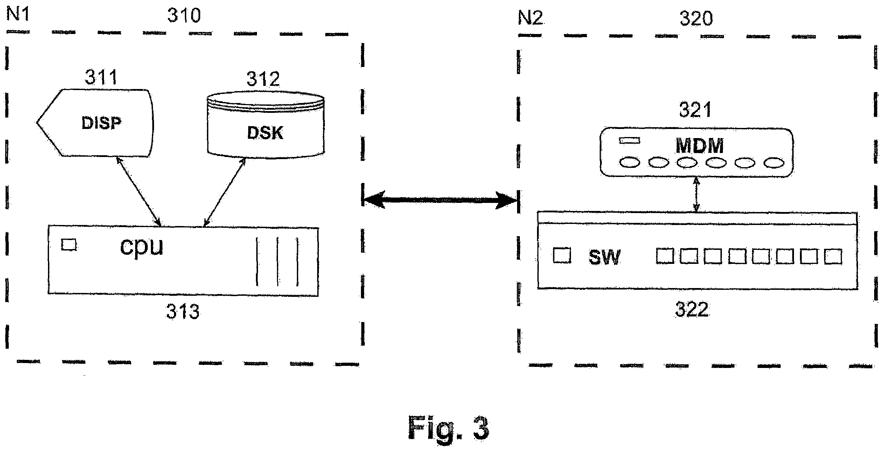

La figure 3 est un exemple générique et simplifié de la variété des dispositifs qui peuvent constituer un noeud. Cette figure 3 fait apparaître un noeud N1 310 interconnecté avec un noeud N2 320.

Le noeud N1 310 peut comprendre un dispositif d'affichage, ou dispositif DISP 311, et/ou un disque de stockage, ou disque DSK 312, avec son contrôleur, et/ou encore une unité centrale de traitement, ou unité CPU 313.

Le noeud N2 320 peut comprendre un modem MDM 321, et/ou un commutateur SW 322, qui peut être également routeur.

Les ressources comprises dans un noeud sont au moins partiellement configurable, par exemple au moyen d'une commande reçu par l'unité de calcul, ou CPU, du noeud en question. Le terme d'unité de calcul doit être pris ici dans un sens largue, et ne pas être limité au microprocesseur équipant l'unité centrale d'un ordinateur personnel, d'une station de travail ou d'un serveur.

Sur la base de telles structures, on peut réaliser des réseaux étendus sophistiqués. Dans ce domaine, il existe actuellement un projet dit "HIPCAL" et un autre dit "CARRIOCAS", utilisant le concept de "HIPerNet", à savoir un accès aisé et protégé à une infrastructure de calcul distribuée. Ce type de réseau est souvent associé à la notion de réseaux en grille, ou "grid networks" en anglais, ainsi que de calcul en grille, ou "grid computing" en anglais, et de calcul distribué, ou "Cloud computing" en anglais. Le mot "calcul" vise ici toute opération réalisable par un ordinateur.

On cite maintenant quelques unes des publications existant dans ce domaine.
- "Flow scheduling and endpoint control in Grid networks", S. SOUDAN, B. CHEN, P. VICAT-BLANC PRIMET, Future generation computer systems 25 (2009), Elsevier, pages 904 à 911.
   Cet article s'intéresse à la gestion des mouvements de jeux de données massifs à l'intérieur de ressources distribuées, de calculs ou de stockage, associés à des instruments scientifiques de captures d'informations. La solution proposée est basée sur un mécanisme de mise en oeuvre de profil de largueur de bande, associé au protocole de transport traditionnel. Cet article introduit l'approche d'allocation malléable de ressource par profil temporel de capacité représenté par une fonction en escalier. Ce profil n'est utilisé que dans le cas de l'allocation de bande passante IP pour acheminer un volume de donnée en temps déterministe.
- "Virtualizing and scheduling optical network infrastructure for emerging IT services", P. VICAT-BLANC PRIMET, S. SOUDAN, D. VERCHERE. Optical Networks for the Future Internet, edition special du Journal of Optical Communications and Networking (JOCN), 1(2):A121-A132, 2009.
   Cet article s'intéresse à la gestion des réservations de bande passante dans un réseau optique. La solution proposée est basée sur un algorithme d'optimisation utilisent la programmation linéaire et mixant des requêtes rigides et des requêtes malléables (avec plusieurs niveaux de bande passante).
- "A scalable security model for enabling Dynamjc Virtual Private Execution Infrastructures on the Internet", P. VICAT-BLANC PRIMET, J.-P. GELAS, O. MORNARD, G. KOSLOVSKI, V. ROCA, L. GIRAUD, J. MONTAGNAT, T. TRUONG HUU, in IEEE/ACM International Conférence on Cluster Computing and the Grid (CCGrid2009), Shanghai, mai 2009.
   Cet article s'intéresse à la gestion de la sécurité dans des infrastructures virtuelles à la demande. La solution proposée est basée sur l'utilisation d'une infrastructure à clé publique simplifiée et sur la délégation.
   Cet article introduit le concept d'infrastructure virtuelle combinant des ressources du réseau et de traitement informatique. Aucune gestion du temps n'est introduite.
- "Les Infrastructures Virtuelles à la demande pour un usage flexible de l'Internet", F. ANHALT, G. KOSLOVSKI, M. PASIN, J.-P. GELAS, P. VICAT-BLANC PRIMET, Journées Doctorales en Informatique et Réseaux, JDIR 09, Belfort, France, février 2009.
   Cet article introduit le concept d'infrastructure virtuelle combinant des ressources du réseau et de traitement informatique. Aucune gestion du temps n'y est développée.
- "Exploring the virtual infrastructure service concept in Grid'5000", P. VICAT-BLANC PRIMET, F. ANHALT, G. KOSLOVSKI, 20th ITC Specialist Seminar on Network Virtualization, Hoi An, Vietnam, mai 2009.
   Cet article explore le concept d'infrastructure virtuelle combinant des ressources du réseau et de traitement informatique. Il s'intéresse à l'usage d'une telle infrastructure pour la création d'environnements expérimentaux à la demande.
- "VXDL: Virtual Resources and Interconnection Networks Description Langage", G. PIEGAS KOSLOVSKI, P. VICAT-BLANC PRIMET, A. SCHWERTNER CHARÃO, Network for Grid Application, Springer Berlin Heidelberg, 2009
   Cet article propose un langage de description d'une entité "infrastructure virtuelle" combinant des ressources du réseau et des ressources informatiques.
- "Network Virtualization : State of the Art and Research Challenges", N. M. MOSHARAF KABIR CHOWDHURY, R. BOUTABA, IEEE communications Magazine, juillet 2009, pages 20 à 26.
   Cet article fait un état de l'art des problématiques de virtualisation réseau. Il ne mentionne aucune combinaison de ressources réseau virtualisées et de ressources de calcul.
- "Executing distributed applications on virtualized infrastructures specified with the VXDL language and managed by the HÏPerNET framework", G.KLOSLOVSKI, T.TRUONG HUU, J. MONTAGNAT, P. VICAT-BLANC PRIMET, First International Conference on Cloud Computing (CLOUDCOMP 2009), Munich, Allemagne, octobre 2009.
   Cet article s'intéresse à l'utilisation et à l'évaluation d'infrastructures virtuelles combinant des ressources du réseau et des ressources informatiques. La gestion du temps n'est pas développée.
- "CARRIOCAS projet: Towards Converged Internet Infrastructures Supporting High Performance Distributed Applications", O. AUDOUIN, D. BARTH, M. GAGNAIRE, C. MOUTON, P. VICAT-BLANC PRIMET, D. RODRIGUES, L. THUAL, D. VERCHERE, IEEE/OSA Journal of Lightwave Technology, 2009.

Cet article présente de manière très générale l'approche de virtualisation combinée du réseau et des équipements informatiques.
- Demande de brevet aux États-Unis d'Amérique au nom de JOHANSSON et al publiée sous le numéro US 2005/0157644 A1 pour "Method and system for reserving resources within an IP-Network".

Dans des réseaux étendus tels que ceux des articles ci-dessus, notamment HIPCAL et le concept associé HIPerNET, on utilise le plus souvent la "virtualisation", c'est-à-dire qu'un ensemble d'éléments physiques, d'une infrastructure physique, sont gérés collectivement pour former un élément, virtuel, d'une infrastructure virtuelle. Par exemple, plusieurs unités de calcul, y compris distantes les unes des autres, peuvent être virtuellement associées pour constituer une unique unité de calcul, de capacité supérieure.

Inversement, un même élément de l'infrastructure physique peut héberger des éléments différents d'une même infrastructure virtuelle ou des éléments d'infrastructures virtuelles différentes. C'est le cas par exemple lorsque plusieurs machines virtuelles sont exécutées sur une même machine physique.

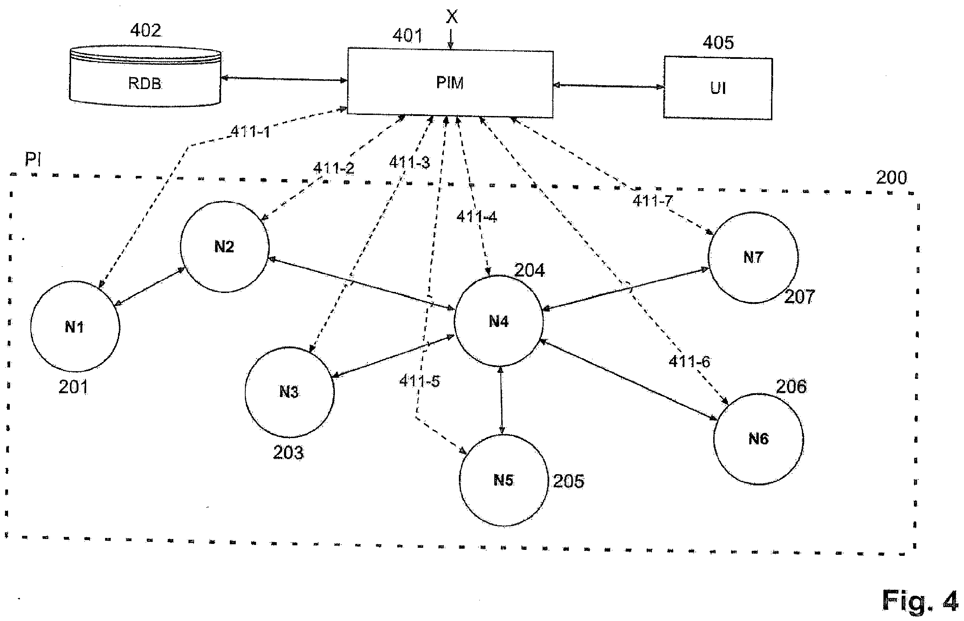

La figure 4 montre un gestionnaire d'infrastructure physique, ou gestionnaire PIM 401, adjoint à l'infrastructure PI 200. Le gestionnaire PIM 401 est relié à chacun des noeuds Ni de cette infrastructure PI 200 au moyen d'un lien respectif 411-i, représenté en trait tireté fin. Chaque lien permet un échange de données entre le gestionnaire PIM 401 et le noeud Ni correspondant.

Le gestionnaire PIM 401 peut en outre être relié à une interface utilisateur, ou interface UI 405. Ce gestionnaire PI 401 est capable de recevoir une requête X, éventuellement par l'intermédiaire de l'interface UI 405, sur laquelle requête on reviendra plus avant.

Le gestionnaire PIM 401 est adapté pour maintenir une représentation dynamique de l'infrastructure PI 200, c'est-à-dire principalement de l'ensemble des ressources de cette infrastructure PI 200, y compris les noeuds Ni de cette infrastructure et les liens de communication entre ces noeuds, Le gestionnaire PIM 401 est en outre adapté pour maintenir une représentation de l'état fonctionnel de ces ressources.

En relation avec chacune des ressources de l'infrastructure PI 200, le gestionnaire PIM 401 maintient en particulier une liste d'attributs dits "physiques", ainsi qu'une liste de fonctions de contrôle et de commande pour la ressource en question. Ces fonctions de contrôle sont génériquement désignées "fonctions CTRL()" et les fonctions de commande, "fonctions CMD()". La forme des fonctions CTRL() et CMD() dépend de la nature de la ressource concernée.

Par exemple, le gestionnaire PIM 401 maintient pour chacune des ressources de l'infrastructure PI 200 un objet correspondant de type "ressource de manipulation de l'information", tel que défini en annexe A.1.1.2, que l'on désigne ci-après objet de type *R.* On comprend qu'un "type" d'objet peut correspondre à ce que l'on appelle généralement une "classe" d'objet.

Chaque objet de type R comprend notamment, en tant qu'attributs physiques, un identifiant universel de ressource physique "*URI*" et un type de ressource physique *"type_r",* lequel type appartient à l'ensemble extensible des types de ressources décrit en annexe A.1.3,1,

Le gestionnaire PIM 401 peut être relié à un espace de stockage de données organisé pour maintenir cette représentation de l'infrastructure PI200. L'espace de stockage prend par exemple ici au moins partiellement la forme d'une base de données, désignée base RDB 402 sur la figure 4.

Dans un mode de réalisation avantageux, le gestionnaire PIM 401 crée une instance de la classe R pour chaque ressource de l'infrastructure PI 200 sous la forme de ce que l'on appelle un "démon", ou encore un "daemon". Chaque démon peut ainsi être invoqué, par exemple par des fonctions listées dans la classe *R*, ou d'autres fonctions encore.

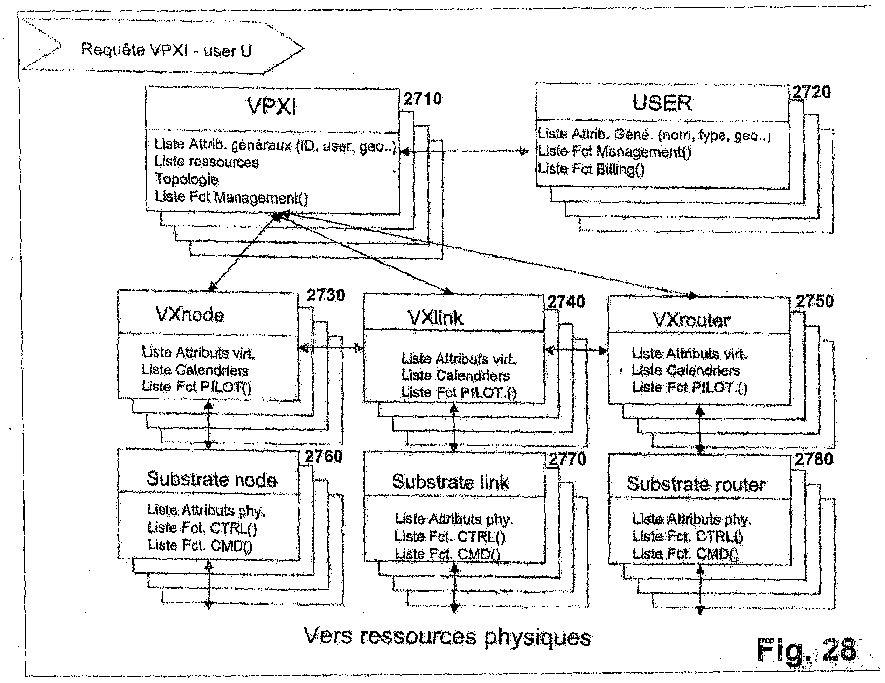

La figure 28 montre par exemple que le gestionnaire PIM 401 maintient ;
- pour chaque noeud Ni de l'infrastructure PI 200, un objet correspondant, génétiquement noté Substrate Node 2760;
- pour chaque lien Li de type réseau entre ces noeuds, un objet correspondant génériquement désigné objet Substrate Link 2770;
- pour chaque dispositif de routage, un objet correspondant génétiquement désigné objet Substrate Router 2780.

Bien que la figure 4 montre deux réseaux d'échange de données distincts, il est possible de réaliser un dispositif fonctionnellement équivalent en un unique réseau. Autrement dit, le gestionnaire PIM 401 peut échanger des données avec certain au moins des noeuds Ni par l'intermédiaire des liens réseaux entre ces noeuds.

En outre, bien que le gestionnaire PIM 401 ait été représenté ici en dehors de l'infrastructure PI 200, il faut comprendre que ce gestionnaire peut également appartenir à cette infrastructure, voire être distribué sur un ou plusieurs des noeuds de cette dernière.

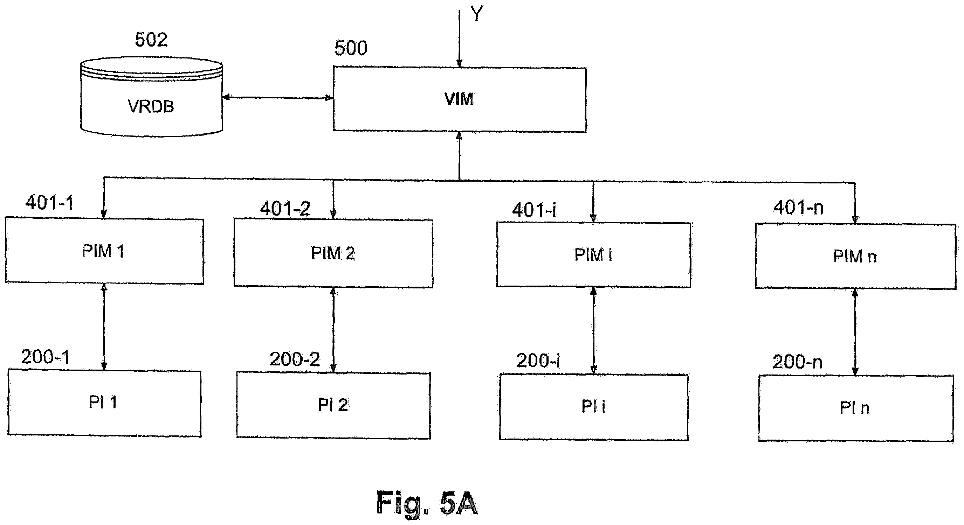

La figure 5A montre une pluralité d'infrastructures physiques, à savoir les infrastructures PI1 200-1, PI2 200-2,..., PIi 200-i,..., PIn 200-n, contrôlées par des gestionnaires d'infrastructures physiques respectifs, à savoir les gestionnaires PTM1 401-1, PIM2 401-2,...,PIMi 401-i,..., et PIMn 401 -n. Ces gestionnaires PIMi 400-i sont reliés un gestionnaire d'infrastructure virtuelle, ou gestionnaire VIM 500. La communication entre le gestionnaire VIM 500 et les gestionnaires PIMi 401-i peut s'établir selon un protocole standard, par exemple de type MTOSI (de l'anglais "Multi-Technology Opérations System Interface" ou "Interface de systèmes d'exploitation de multiples technologies" en français), ou un protocole analogue, y compris propriétaire.

Le gestionnaire VIM 500 est capable d'émettre des requêtes X à destination de chacun des PIMi 401-i, lesquelles requêtes peuvent comprendre des commandes à exécuter comme on le verra plus loin. Ce gestionnaire VIM 500 peut recevoir des requêtes Y, sur lesquelles on reviendra également plus loin.

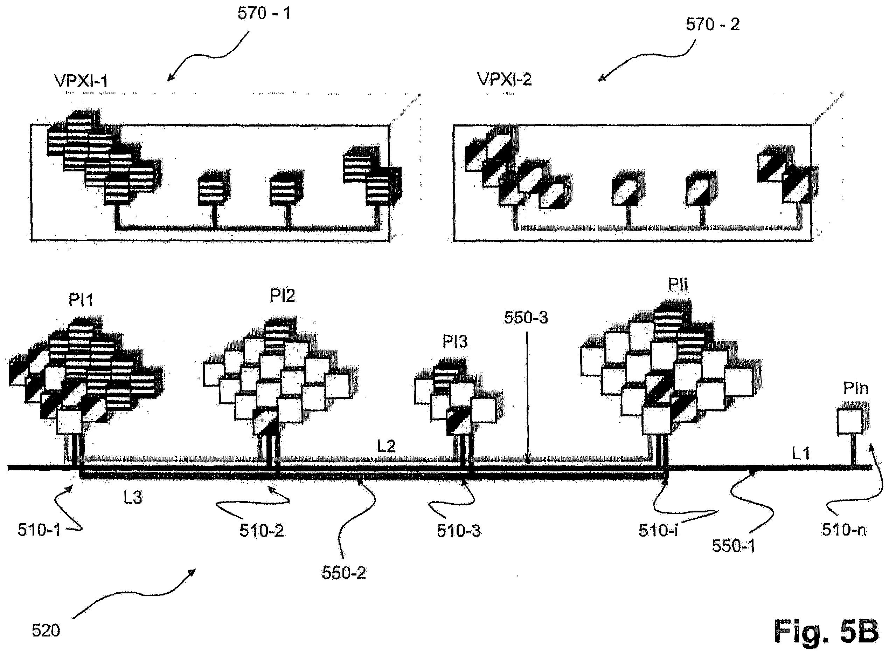

La figure 5B représente en partie basse une partie de l'infrastructure de la figure 5A sous une forme dite "virtualisée", que l'on peut désigner infrastructure virtuelle, ou infrastructure VI510.

Dans cette forme virtualisée, chaque ressource physique est vue par le gestionnaire VIM 500 comme un élément fonctionnel en termes de manipulation d'informations. Le gestionnaire VIM 500 voit ainsi chaque infrastructure physique PI comme un agrégat d'éléments fonctionnels,

La figure 5B montre par exemple une infrastructure physique PI1, référencés 510-1, une infrastructure physique PI2, référencée 510-2, une infrastructure physique PI3, référencée 510-3, une infrastructure physique PIi, générique, référencée 510-i, et une infrastructure physique Pin, référencée 510-n, à chaque fois sous une forme virtualisée.

Chaque élément fonctionnel est représenté par un cube. Bien que cela ne soit pas visible sur la figure 5B, chaque ressource physique est fractionnable, en ce qui concerne sa capacité fonctionnelle propre, en plusieurs éléments fonctionnels. En outre, la capacité de ces éléments fonctionnels peut être variable dans le temps.

De manière générique, chaque élément fonctionnel peut être vu comme une "machine virtuelle" s'exécutant sur une ressource physique.

La forme d'une machine virtuelle, et les possibilités de gestion qu'elle offre, dépendent de la nature de la ressource physique sur laquelle elle est exécutée et de sa fonction au sein de l'infrastructure. Sur ce point, la notion de machine virtuelle telle qu'elle est entendue ici peut aller au-delà de ce que la technique entend classiquement par une machine virtuelle. Par exemple, une partition d'un espace de stockage de données peut être vue comme une machine virtuelle "s'exécutant" sur cet espace. Ceci a été fait pour aider à la compréhension de la présente description.

Des exemples de produits permettant la virtualisation d'équipements informatiques comprennent les logiciels "VMWARE" (nom commercial enregistré) et "XEN" (nom commercial enregistré). Un exemple de commutateur/routeur visualisable a été décrit dans la demande de brevet français déposée sous le numéro

En toute rigueur, la virtualisation d'une ressource physique consiste à définir une ou plusieurs ressources partageant, en capacité et/ou dans le temps, la capacité fonctionnelle de cette ressource physique. Cela, implique l'exécution d'agents de virtualisation sur la ressource physique elle-même ou au moins sur le gestionnaire PIM qui a la charge decette ressource. Ces agents peuvent commander, configurer et/ou contrôler la ressource physique par l'intermédiaire des fonctions CMD() et CRTL() évoquées plus haut.

En pratique, chaque gestionnaire PIMi 401-i décide des ressources de son infrastructure physique qui vont être virtualisées. Pour certaines ressources, on peut choisir de ne virtualiser qu'une partie de la ressources.

Les liens physiques composant l'infrastructure physique sont également décomposables en liens virtuels. Par exemple, la figure 5B montre un lien virtuel L1 550-1 reliant les infrastructures PI2, PI3, Pli et PIn, tandis que des liens virtuels L2 550-2 et L3 550-3 relient les infrastructures PI1, PI2, PI3 et PIi.

Dans la forme "virtualisée" de l'infrastructure physique, chaque noeud ou lien est vu comme fonctionnellement homogène. Autrement dit, pour l'infrastructure chaque ressource n'est douée, à un instant donné, que d'une seule fonctions, dite principale, telle que stockage, calcul, lien de communication, ou routeur par exemple. Le plus souvent, une ressource physique assure constamment la même fonction, mais cela n'est pas obligatoire. Par exemple, un ordinateur personnel, en ce qu'il comprend une capacité de calcul grâce à son processeur et une capacité de stockage offerte par son disque dur, est susceptible, dans une infrastructures virtuelle, d'offrir ces fonctions deux fonctions, mais pas de manière simultanée.

Bien que la partie basse de la figure 5B ne représente qu'une partie de l'infrastructure de la figure 5A, on comprend que l'ensemble de cette infrastructure a vocation à être virtualisée, en particulier, chaque infrastructure physique PI-i, par exemple l'infrastucture PI 1200-1, PI 200-2, PI-i 200-i et PIn 200-n.

Dans certains cas, il se peut que tous les noeuds d'une même sous-infrastructure physique offrent en permanence une même fonction. C'est le cas, par exemple, lorsque la sous-infrastructure prend la forme de ce que l'on appelle un "cluster" en anglais, ou une grappe de serveurs en français. Cela n'est cependant pas obligatoire.

Sur la base d'une infrastructure physique virtualisée telle que montrée en partie basse de la figure 5B, le gestionnaire VIM 500 est adapté pour définir une ou plusieurs infrastructures virtuelles, ou infrastructures VPXI (de l'anglais "Virtual Private eXecution Infracture", ou "infrastructure d'exécution privée virtuelle" en français). Chaque infrastructure VPXI comprend ainsi des noeuds virtuels reliés entre eux par des liens virtuels. Autrement dit, une infrastructure VPXI est composée de ressources virtuelles définies à partir de ressources physiques. De manière générale, chaque noeud virtuel comprend une partie de la capacité fonctionnelle d'un noeud physique, Et un lien virtuel comprend une partie de la bande-passante offerte par le ou les liens physiques sur lesquels elle s'appuie. Cependant, certaines ressources virtuelles peuvent correspondre à l'ensemble de la capacité fonctionnelle d'une ressource physique, du moins l'ensemble de la capacité fonctionnelle que l'on a décidé de virtualiser, aussi appelée "capacité exposée".

À titre d'exemple, la partie supérieure de la figure 5B montre une première infrastructure virtuelle VPXI-1 570-1, comprenant des noeuds virtuels représentés par des cubes hachurés horizontalement, et une seconde infrastructure virtuelle VPXI-2 570-2, comprenant des noeuds virtuels représentés par des cubes hachurés obliquement. Les hachures différenciant les première et seconde infrastructures virtuelles VBXI-1 570-1 et VPXI-2 -570-2 ont été reprises sur la partie basse de la figure 5B, à chaque fois en relation avec les noeuds physiques correspondants.

Comme on l'a évoqué plus haut un noeud virtuel peut être défini à partir d'une partie seulement de la capacité fonctionnelle d'un même noeud physique.

Une même sous-infrastructure virtuelle peut ne rassembler que des ressources de même fonction (calcul, stockage ou impression pair exemple), ce qui permet, d'une certaine façon, d'additionner leur capacité respective. Cependant, il est également possible de créer des infrastructures virtuelles complexes, par exemple comprenant deux éléments de calcul reliés entre eux par un lien Internet, en plus d'un ensemble d'éléments de stockage relié à l'un de ces deux éléments de calcul.

Les différentes infrastructures virtuelles sont isolées les unes des autres, ce qui permet à chaque infrastructure de bénéficier d'un niveau élevé de sécurité et de gestion de capacité et de performance.

Une fois définie, une infrastructure VPXI peut être spécifiquement attribuée à un utilisateur.

Entre autres choses, le gestionnaire VIM 500 sélectionne, alloue et gère les ressources virtuelles et les liens entre les noeuds virtuels.

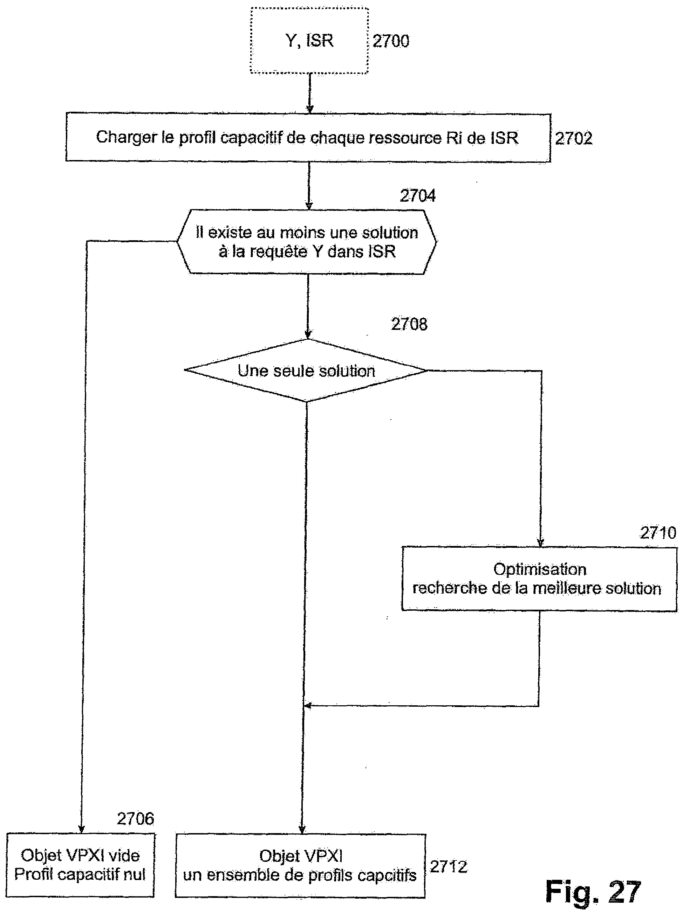

Pour chaque infrastructure virtuelle VPXI, le gestionnaire VIM 500 maintient un objet informatique représentant cette infrastructure, génériquement désigné objet VPXI 2710 sur la figure 27.

Cet objet VPXI maintient en relation :
- un ensemble d'attributs généraux relatifs à la sous-infrastructure comprenant notamment une donnée d'identification de la sous-infrastructure virtuelle, une donnée d'identification de l'utilisateur auquel cette sous-infrastructure est attribuée, une donnée de localisation géographique, ou « point d'ancrage » , désignant la partie de l'infrastructure PIM 200 qui requiert la réservation de ressources, une donnée de contrainte de sécurité, qui définit le niveau de sécurité requis pour les ressources, une donnée de période d'allocation, qui définit une période d'existence de la sous-infrastructure dans le temps, par exemple sous la forme d'une date de début de réservation et un temps total d'exécution ou une date de fin d'allocation;
- une liste des ressources, généralement virtuelles, concernées par l'objet VPXI, avec notamment les liens reliant les noeuds entre eux, la description de chaque ressource, les attributs fonctionnels et non fonctionnels de la ressource, à savoir les ressources individuelles ou agrégées impliquées dans la sous-infrastructure, les performances de la ressource en question, par exemple sa capacité, les attributs de sécurité de la ressource, le type du contrôle d'accès ou le niveau de confidentialité requis, éventuellement une donnée de coût de réservation admissible, les fonctions élémentaires qui peuvent être attribuées à cette ressource, éventuellement les services spécifiques fournis par la ressource ;
- la topologie du réseau virtuel comprenant des caractéristiques de performance telles que la bande passante et la latence, ainsi que des attributs de sécurité, de coût commercial et de temps liant les ressources virtuelles entre elles ;
- un ensemble de fonctions de gestion qui peuvent être mises en oeuvre sur la sous-infrastructure ;
- une ligne de temps virtuel avec une définition en résumé pour les ressources finales et les liens.

Pour chaque noeud virtuel, le gestionnaire VIM 500 crée et maintient un objet informatique correspondant, génériquement noté objet VXnode 2730 sur la figure 28; mettant en relation une liste d'attributs dits "virtuels" et une liste de fonctions de pilotage de la ressource physique correspondante. Ces fonctions de pilotage sont génériquement désignées fonctions PILOT(). Un objet VXnode 2730 comprend encore une liste de calendriers, sur lequel on reviendra plus avant.

Les attributs virtuels comprennent, entre autres choses, un type de ressource, noté *"typer_r"*, lequel type appartient à l'ensemble extensible "des types de ressource de traitement de l'information" décrit à l'annexe A.1.3.1, ou ensemble *Rt*, des attributs de sécurité, de fiabilité, de mobilité, d'autonomie de redimensionnement et de surveillance.

Le gestionnaire VIM 500 maintient encore un objet de lien virtuel pour chaque lien virtuel d'une sous-infrastructure virtuelle, génétiquement noté objet VXlink 2740 sur la figure 28, et qui met en relation des entrées analogues à un objet VXnode 2730. Entre autres choses; un objet VxIink 2740 comprend un identifiant du noeud virtuel d'origine et un identifiant du noeud virtuel de destination.

Le gestionnaire VIM maintient encore pour chaque rouleur virtuel un objet informatique, génétiquement désigné objet VXrouter 2750 sur la figure 28, et qui présente des entrées analogues à l'objet VXnode.

Comme le montre la figure 28, chaque objet VPXJ comprend des pointeurs vers chacune des ressources virtuelles qui le composent, à savoir un ou plusieurs objets Vxnode 2730, Vxlink 2740 et VXrouter 2750.

Chaque objet VXnode 2730 comprend un pointeur vers un objet substrate Node 2760 correspondant au noeud physique sur lequel est défini le noeud virtuel, En général, plusieurs objets VXnode 2730 peuvent pointer vers un même objet substrate Node 2760.

De manière analogue, chaque objet Vxlink 2740 et chaque objet Vxrouter 2750 pointe respectivement vers un objet substrate link 2770 et un objet substrate router 2780.

Le gestionnaire VIM 500 maintient en outre pour chaque utilisateur d'une infrastructure VPXI, un objet utilisateur, génétiquement représenté USER 2720 sur la figure 28, en relation avec l'objet VPXI 2710 qui lui est attribué. Un objet USER 2720 maintient en relation:
- une liste d'attributs généraux relatifs à l'utilisateur, comprenant notamment des données de nom d'utilisateur, des données de type d'utilisateur, des données de localisation géographique de l'utilisateur;
- une liste de fonctions de gestion, ou génériquement désignées fonctions Management() ;
- une liste de fonctions de paiement, ou génériquement désignées fonctions Billing().

Pour le stockage des différents objets, le gestionnaire VIM 500 peut être relié à un espace de stockage organisé du type base de données, par exemple la base de données VRDB 502 de la figure 5A.

Dans un mode de réalisation avantageux, chaque objet VXnode 2730, chaque objet VPXI 2710, chaque objet VXlink 2740, chaque objet VXrouter 2750 prend la forme d'un "démon", ou d'un agent, exécuté par le gestionnaire VIM 500. En option, chaque objet USER 2720 peut également être réalisé sous cette forme.

Ce gestionnaire VIM 500 peut avantageusement être réalisé sous la forme de ce que l'on appelle un "framework" en anglais, ou "cadre d'application" en français.

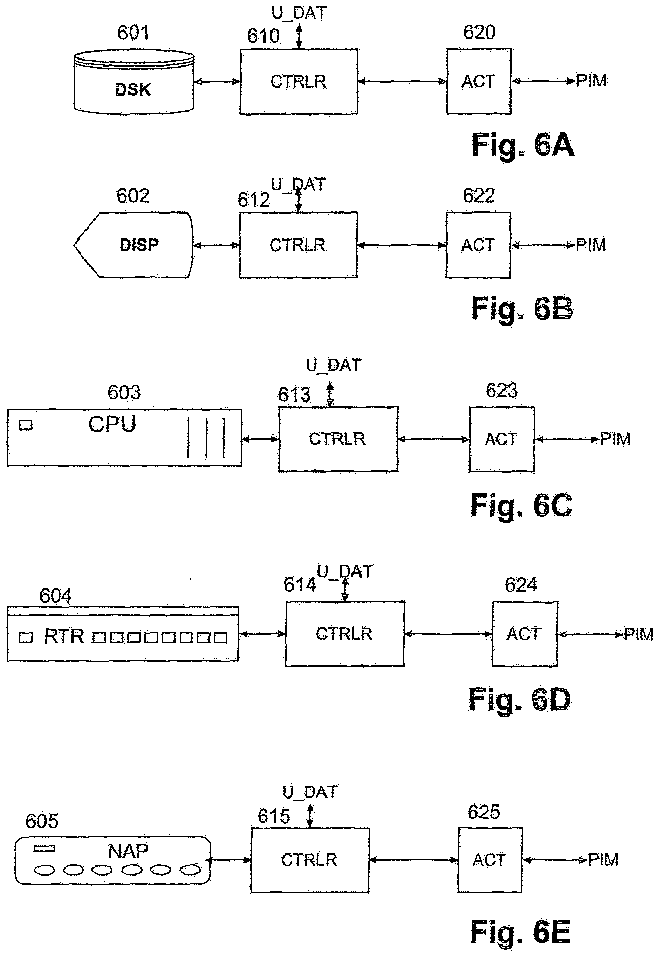

La gestion des infrastructures virtuelles VPXI, comme celle des infrastructures physiques, implique que l'on puisse intervenir sur chaque ressource de l'infrastructure physique, considérée individuellement. Des exemples de structures physiques qui le permettent sont décrits, à titre d'exemple non limitatif, en faisant référence aux figures 6A à 6E.

La figure 6A montre un disque de stockage de données, ou disque DSK 601, assorti de son contrôleur de capacité, ou contrôleur CTRLR 611, qui permet l'échange de données utiles, ou données U_DAT, en lecture et/ou écriture avec le disque DSK 601. Le contrôleur CTRLR 611 est capable de faire opérer le disque DSK 601, conformément à un jeu de paramètres de fonctionnement.

Le contrôleur CTRLR 610 est assorti d'une unité qui assure son interconnexion avec un gestionnaire PIM en charge du disque DSK 601. Cette unité, désignée unité ACT 611, peut être vue comme un actionneur chargé d'exécuter des instructions provenant du gestionnaire PIM concerné, par exemple transmises au travers du réseau de communication représenté en trait tireté sur la figure 4. Ces instructions peuvent avoir une forme particulière. Ces instructions correspondent aux appels fonctions CTRL() et CMD() pointées par les objets Substrate node 2760, substrate link 2770, et/ou substrate router 2780. En général, la forme de ces instructions dépend au moins en partie de la nature de l'équipement contrôlé/commandé.

Les figures 6B à 6E illustrent des dispositions semblables à celles de la figure 6A :
- sur la figure 6B, un dispositif d'affichage, ou dispositif DISP 602, est relié à son contrôleur CTRLR 612 respectif, lui-même relié à une unité ACT 622 ;
- sur la figure 6C, une unité centrale de calcul, ou unité CPU 603, est reliée à une unité ACT 623 par l'intermédiaïre de son contrôleur CTRLR 612 ;
- sur la figure 6D, un commutateur et/ou routeur, ou dispositif RTR 604, est relié à son contrôleur CTRLR 614, lequel est à son relié à une unité ACT 624 ;
- sur la figure 6E, un point d'accès réseau, ou point NAP 605, est relié à une unité ACT 625 par l'intermédiaire de son contrôleur CTRLR 615.

Dans le cas général, le gestionnaire PIM envoie des instructions aux actionneurs ACT sur appel des fonctions CTRL() et/ou CMD(). Dans certains cas, le recours à un actionneur ACT n'est pas possible ou pas nécessaire. Alors les données nécessaires à la configuration au contrôle et/ou à la commande de la ressource sont directement reçues au contrôleur CTRLR sous la forme de données utiles, désignées données U-DAT sur les figures 6A à 6E. Ceci inclut le cas où les données utiles sont directement entrées sur l'équipement par un opérateur humain, par exemple lorsqu'une reconfiguration manuelle de l'équipement est nécessaire. L'actionneur ACT est capable de modifier certains au moins des paramètres de fonctionnement de son contrôleur respectif.

L'actionneur peut être vu comme un agent de gestion pour une ressource.

La gestion des ressources dans l'infrastructure PI 200 nécessite des agents de gestion capable de maintenir des fonctions de contrôle et de commande ainsi qu'un registre d'état pour chaque ressource de l'infrastructure. Pour la bonne gestion de l'infrastructure, chaque agent de gestion doit pouvoir s'exécuter, idéalement en permanence. De la nature de la ressource physique à gérer, peut dépendre l'environnement d'exécution de l'agent. Ainsi, par exemple, lorsque la ressource est dépourvue de moyens d'exécution (calcul), l'agent pour sa gestion, peut être déporté à un emplacement différent de l'infrastructure, typiquement sur le gestionnaire PIM200, comme c'est le cas en particulier des liens réseau. Il peut être alors avantageux de prévoir un agent commun à l'ensemble des ressources à gérer au niveau du gestionnaire PIM 200.

Le contrôleur est capable de modifier des données quantitatives de capacité maximale de la ressource dont il s'occupe.

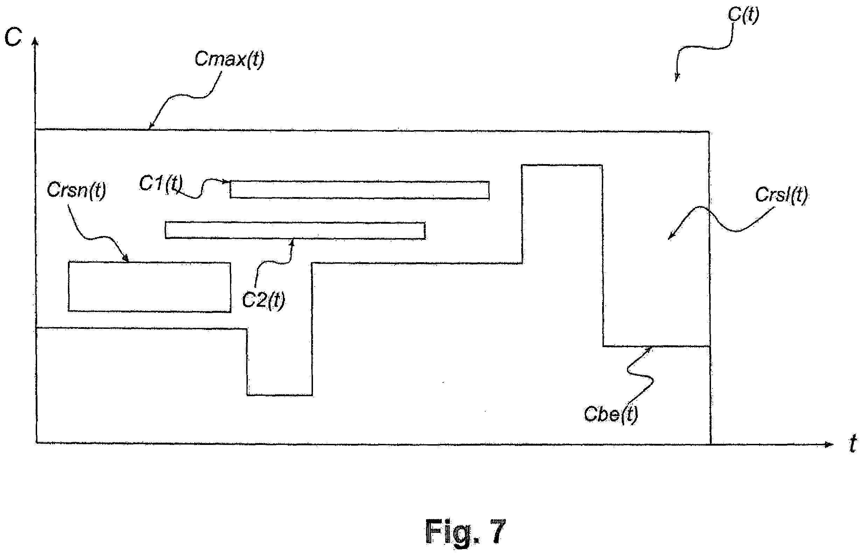

La figure 7 représente un exemple de ce que l'on peut appeler un "profil temporel de capacité" pour une ressource, que l'on note profil *C(t)*.

Un profil temporel *C(t)* peut être établi pour toute ressource physique de l'infrastructure PI 200. Un tel profil peut également être établi pour toute ressource virtuelle.

Le profil temporel *C(t)* d'une ressource est constitué de l'ensemble des variations concernant la capacité fonctionnelle *C* de cette ressource au cours du temps *t*, ou d'une période de temps.

Tout profil *C(t)* comprend d'abord un sous-profil temporel de capacité totale, ou profil *Cmax(t),* correspondant à l'évolution temporelle de la capacité fonctionnelle maximale de la ressource. Sur la figure 7, la capacité totale *Cmax* de la ressource est constante dans le temps, mais cela ne constitue qu'un exemple.

Un profil *C(t)* peut en outre comprendre un ensemble de sous-profils temporels de capacité réservée, à chaque fois, à une infrastructure *i*. En général, l'infrastructure *i* prendra la forme d'une sous-infrastructure virtuelle, typiquement une infrastructure VPXI, sans que cela ne soit pour autant obligatoire. Le sous-profil de capacité réservée à l'infrastructure *i* est noté *Ci(t).* La figure 7 montre ainsi un sous-profil de capacité réservée pour une première infrastructure 1, noté *C1(t),* et un sous profil de capacité réservée pour une seconde infrastructures 2, noté *C2(t)*.

Un sous-profil de capacité réservée *Ci(t)* peut comprendre un ou plusieurs fragments de réservation, c'est-à-dire une quantité de la capacité de la ressource réservée à la partie de l'infrastructure en question entre deux dates. À un fragment de réservation peut correspondre une capacité intégrale, définie comme la somme entre ces deux dates de la partie correspondante du sous-profil de capacité réservée.

Un profil *C(t)* peut encore comprendre un sous-profil de capacité "best effort", ou profil de capacité au mieux, noté *Cbe(t)*. Le sous-profil *Cbe(t)* correspond à la capacité de la ressource qui est publique et dédiée à du service dit "best effort". Cette capacité "best effort" n'est pas allouée à une partie spécifique de l'infrastructure PI 200. Lorsqu'il est considéré entre deux dates, ce profil de capacité "best effort" délimite un fragment dit "best effort", représentant une capacité intégrale. Autrement dit, toute ressource dont la capacité totale peut être répartie entre une capacité sans garantie et une capacité garantie comprend un profil C*(t)* avec une capacité "best effort" C*be(t).* C'est le cas en particulier des ressource de type communication ou qui comprennent un lien Internet.

Le profil *C(t)* peut encore comprendre un sous-profil de capacité de réserve, ou profil *Crvn(t),* correspondant à la capacité de la ressource mise en réserve. Le profil *Crvn(t)* peut comprendre des fragments de capacité de réserve.

Enfin, le profil *C(t)* comprend un sous-profil de capacité résiduelle, ou profil *Crsl(t)*, qui correspond à l'évolution temporelle de la capacité de la ressource qui n'est ni attribuée à une partie de l'infrastructure, ni mise en réserve, ni allouée au service BE. Cette capacité résiduelle est disponible pour les éléments de l'infrastructure PI 200. Elle peut être qualifiée de capacité "réservable", "disponible" ou encore "exposée".

Le prof *C(t)* d'une ressource peut être représenté par un ensemble de fonctions temporelles en forme d'escalier. Chaque fonction peut prendre des valeurs positives dans l'ensemble des nombres réels, des nombres rationnels, des nombres entiers ou des nombres booléens, en fonction notamment des possibilités de diviser la capacité de cette ressource. La fonction d'une ressource s'entend comme la fonction que cette ressource exerce au sein de l'infrastructure, par exemple une fonction de calcul ou de traitement de l'information, une fonction de stockage, une fonction de communication, une fonction de roulage, une fonction de visualisation, une fonction d'acquisition ou de capture de données.

La mesure de la capacité fonctionnelle *C* d'une ressource dépend de la fonction de cette ressource. Par exemple, la capacité associée à une fonction de communication peut être mesurée par un débit de transmission de données numériques, par exemple exprimée en bits, et la capacité associée à une fonction de stockage peut être exprimée sous la forme d'une quantité de données numériques, par exemple exprimée en octets.

À chaque instant, la somme des capacités fonctionnelles allouées d'une ressource, c'est-à-dire effectivement allouées à une infrastructure, est inférieure ou au plus égale à la capacité maximale de cette ressource. La capacité résiduelle d'une ressource, qui s'exprime également sous la forme d'un profil, peut être proposée à une infrastructure ou gardée en réserve. Autrement dit, la capacité totale d'une ressource peut être vue comme l'imbrication de l'ensemble des profils de capacité fonctionnelle allouée et du profil de capacité fonctionnelle résiduelle. Chaque profil peut être vu comme un jeu de valeurs datées de données quantitatives de capacité.

L'allocation d'un fragment de capacité à une infrastructure s'entend dans un sens large comme indiquant que, pendant la période temporelle correspondante, la ressource opère pour le compte de l'infrastructure en question. La partie de la capacité correspondante constitue alors une ressource virtuelle de l'infrastructure en question pour la période de temps correspondante.

Autrement dit, il est équivalent de dire qu'un fragment de capacité est alloué à une infrastructure ou à une ressource de cette infrastructure.

Une même ressource physique peut assurer des fonctions différentes au sein de l'infrastructure, physique ou virtuelle, mais, dans une période de temps donnée, cette ressource n'assure qu'une seule et unique fonction, dite "principale".

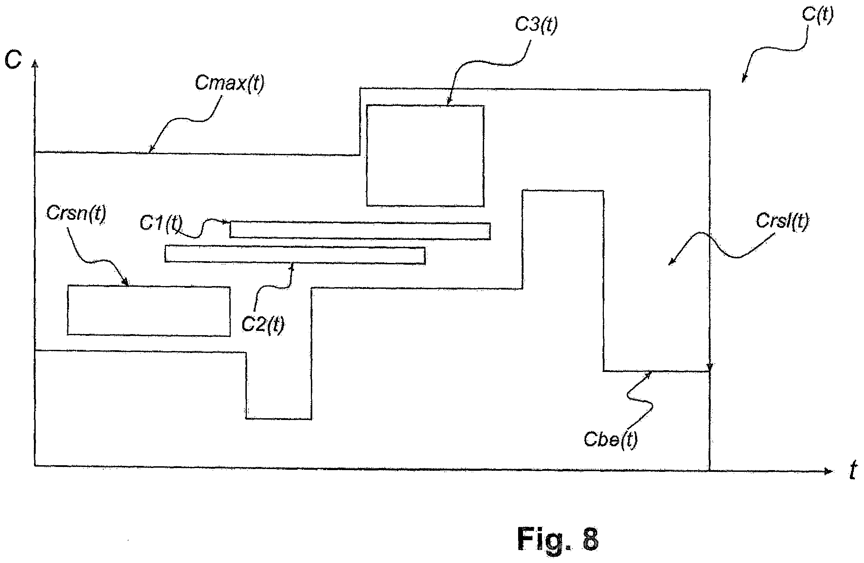

La figure 8 montre que la capacité maximale *Cmax* d'une ressource peut se trouver modifiée dans le temps.

Cela peut résulter, par exemple, d'évolutions d'approvisionnement, de pannes et autres. Par exemple, la capacité totale d'une baie de stockage s'accroît à partir de l'instant où un disque dur supplémentaire est installé, ou, à l'inverse, décroît dès l'instant où l'un des disques de la baie dysfonctionne et jusqu'à ce que ce disque soit réparé ou remplacé.

La capacité totale d'une ressource peut également se trouver modifiée ensuite d'une nouvelle répartition des ressources du réseau que l'on appelle aussi "reprovision" ou encore "reprovisionnement".

Par exemple, dans un réseau de communications à fibres optiques, une augmentation de la capacité maximale peut correspondre à l'éclairement d'une fibre optique supplémentaire du réseau ou à l'activation de nouvelles longueurs d'onde.

Toujours à titre d'exemple, cela peut correspondre à une modification des paramètres d'une machine virtuelle, tels qu'une taille de mémoire de travail, une quantité de bande passante ou encore de puissance de calcul. Dans le cas particulier d'un profil temporel de capacité C (t) relatif à une ressource virtuelle, une variation de la capacité maximale Cmax, qui peut être temporaire, peut résulter/impliquer une redéfinition de cette ressource à partir de la ressource physique sur laquelle elle s'appuie. Par exemple, cela peut correspondre à une augmentation de la taille d'une partition de stockage de données d'un équipement physique, attribuée à la ressource virtuelle en question.

Ici, la mémorisation des différents profils associés aux ressources, virtuelles et physiques, fait intervenir les objets informatiques définis aux annexes A.1.1.6 à A.1.1.9. Chaque profil peut prendre la forme d'un démon exécuté selon les cas sur un contrôleur du type du contrôleur PIM ou du contrôleur VIM, et/ou être stocké sur l'une des bases RDB402 et VRDB502.

En particulier, la liste des calendriers d'un objet VXnode 2730, VXlink 2740, ou VXrouter 2750 peut comprendre un lien vers le profil de cette ressource virtuelle et/ou un lien vers chaque ressource physique impliquée dans cette ressource virtuelle. Le cas échéant, ce lien peut pointer vers une partie seulement d'un profil, tel qu'un sous-profil de capacité réservée, Le plus souvent, le profil de capacité C (t) d'une ressource virtuelle se déduit des profils de capacité des ressource physiques, voire dans certains cas virtuelles, qui la composent.

De même, un objet de ressource physique peut comprendre un tien vers le profil temporel de cette ressource, par exemple maintenu en tant qu'attribut physique dans l'un des objets Substrate mode 2760. Substrate link 2770 et Substrate router 2780.

Le gestionnaire PIM 400 peut maintenir un profil de capacité *C(t)* pour chaque ressource de l'infrastructure Pt 200, en particulier dans les attributs physiques des objets Substrate Node, Substrate Link ou Substrate Router. Le profil de capacité *C(t)* d'une ressource peut également être stocké dans la ressource elle-même, lorsque la constitution physique de cette ressource le permet. Dans ce cas, les objets Substrate Node, Substrate Link ou Substrate Router peuvent pointer vers ce profil.

Le gestionnaire VIM 500 maintient un profil de capacité *C(t)* pour chaque ressource virtuelle basée sur l'infrastructure PI 200. C'est ce que l'on a appelé "calendrier" en relation avec la figure 28. Cela permet notamment de créer des infrastructures VPXI par agrégation/liaison de fragments de capacité d'une ressource virtuelle.

En outre, un noeud virtuel et/ou un objet VPXI peut être crée en agrégeant des capacités fonctionnelles de noeuds physiques (fragments) non attribuées. Par exemple, on peut, sur le même principe, créer des infrastructures dites "best effort" en associant les capacités "best effort" de différentes ressources physiques.

Un profil capacitif temporel associe à une valeur de temps (date) une valeur de capacité. Sur ce principe, il est possible de créer des profils temporels pour des ressources physiques ou virtuelles relatifs à d'autres attributs de la ressource que sa capacité. Il est possible d'établir des profils de sécurité autorisant par exemple l'accès à la ressource seulement à certains moments de la journée, des profils de réplication selon lesquels, par exemple, une ressource (stockage) est répliquée en journée et non la nuit; ou encore des profils de surveillance selon lesquels par exemple une ressource est surveillée les jours ouvrables et non les jours fériés.

On peut définir un profil de capacité pour chaque noeud virtuel car celui-ci peut fonctionner, simultanément, successivement ou tour à tour, pour différentes infrastructures VPXI,

On peut établir des profils temporels pour d'autres attributs, notamment des valeurs relatives à la sécurité, la performance, la localisation géographique, le coût monétaire ou énergétique de la ressource en question.

La requête Y de la figure 5A peut être une requête dite de "réservation", par laquelle on demande la mobilisation d'une partie au moins de la capacité fonctionnelle des ressources de l'infrastructure physique PI 200, pour une période de temps donnée.

La requête Y peut viser une quantité donnée de cette capacité, en accord avec le caractère divisible de cette capacité. La réservation de la ressource peut être limitée dans le temps, et dans ce cas être exprimée sous une forme absolue, c'est-à-dire délimitée par deux dates universelles de l'infrastructure physique PI 200, ou relative, par exemple par la donnée d'un délai de début et d'une période de réservation.

Généralement, une requête en réservation constitue plus exactement une requête de "pré-réservation", car elle vise une réservation future de la capacité fonctionnelle de ressource.

La requête Y peut être également une requête dite de "reprovision", c'est-à-dire une demande de modification de la capacité fonctionnelle d'une ou plusieurs ressources de l'infrastructure, voire de l'ensemble des ressources de cette dernière.

Le plus souvent, une requête de reprovision vise ou implique d'adapter, ou de répartir, les ressources de l'infrastructure physique PI 200 d'une manière différente.

Une requête de reprovision peut être définie de manière absolue ou relative, et être ou non bornée dans le temps.

La requête Y peut viser des éléments virtuels, ou des ressource physiques virtualisées. Généralement, une requête Y a trait à une capacité fonctionnelle et à une période de temps, daté ou non, sans viser un équipement physique ou un noeud virtuel particulier.

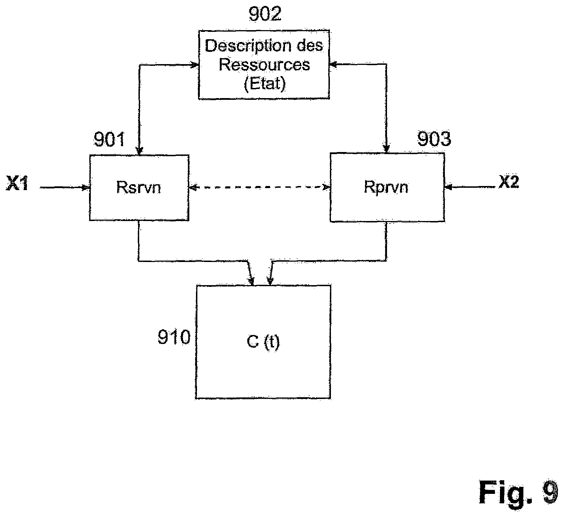

La figure 9 illustre le traitement, d'une requête Y1, analogue à la requête Y de la figure 5A, par le gestionnaire VIM 500.

La requête Y 1 consiste en une requête de réservation. Le gestionnaire VIM 500 met en oeuvre un traitement sur réservation, désigné traitement Rsrvn, représenté par le bloc 901.

Le traitement Rsrvn 901 interagit avec une description de J'état des ressources de l'infrastructure PI 200 ou de l'infrastructure virtuelle VI, ou description, RStat, représentée par le bloc 902. La description RStat 902 peut faire appel aux profils maintenus dans la base RDB 402 et/ou VRDB 502. Le traitement Rsrvn 901 résulte en un profil *C(t)* à pré-réservation, bloc 910. Ce profil *C(t)* à pré-réservation est stocké, par exemple en remplacement du profils initial de la ressource.

La figure 9 illustre également le traitement d'une requête Y2 de reprovision. Le gestionnaire VIM 500 met en oeuvre un traitement de reprovision, ou traitement Rprvn, représenté par le broc 903. Le traitement Rprvn 903 peut interagir avec la descritpion RStat 902 pour établir un profil *C(t)* à reprovision 910.

Le traitement Rsrvn 902 peut impliquer en outre un traitement Rprvn 903, comme l'illustre la flèche en trait tireté fin de la figure 9. Ce peut être le cas, par exemple, lorsque la capacité résiduelle du profil de la ressource est insuffisante au à de la capacité à réserver ensuite de la requête Y1.

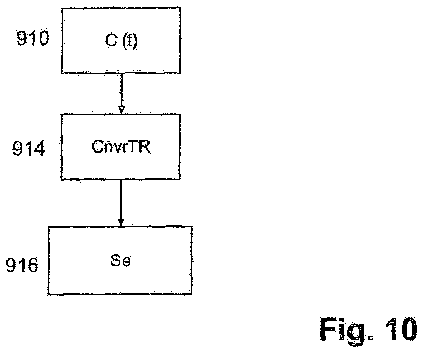

Comme le montre la figure 10, immédiatement ou par la suite, le profil *C(t)* peut être appliqué à un convertisseur Cnvtr 914 pour obtenir ce que l'on appelle ici une "série temporelle d'événements de capacité", ou série *Se* 916.

Une série Se représente une suite chronologiquement ordonnée d'événements datés futurs qui déclenchent des actions de configuration et/ou de gestion de la ressource considérée ensuite de variations dans le profil *C(t)* de cette ressource.

Ici, une telle série est dite à "horizon borné", c'est-à-dire qu'elle ne contient que les événements de capacité compris entre une date de début BD et une date de fin BD, cette date de fin ED étant temporellement éloignée de la date de début d'une période fixée, ou horizon temporel *h*. Cette série est également dite "glissante", c'est-à-dire que la date de début BD est régulièrement avancée à mesure que le temps passe.

Le convertisseur 914 peut être vu comme interprétant les profils de capacité temporels.

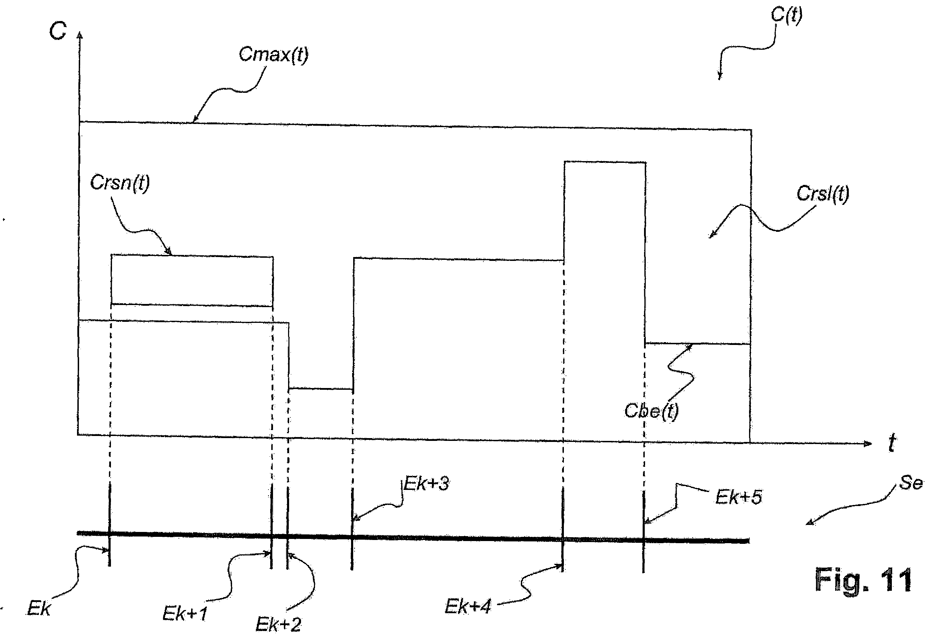

La figure 11 montre une représentation d'une série *Se* correspondant au profil *C(t)* de la figure 7.

La série *Se* comprend un ensemble de triptets informatiques *Ek*, *Ek*+*1*, ..., *Ek*+5, comprenant chacun une donnée de date universelle, une donnée de valeur de capacité et une donnée de pointeur vers un ensemble de fonctions et/ou paramètres de configuration et/ou de gestion de la ressource concernée. À chaque fois que le profil présente une modification d'une quelconque mesure de capacité, un triplet, ou événement, est généré en correspondance. Par exemple, le triplet événement *Ek*+1 correspond à la fin de la mise en réserve de capacité *Crsn(t).*

Avantageusement, la série temporelle 916 prend la forme d'un objet informatique tel que défini en annexe A.1.1.4, en combinaison des objets définis aux annexes A.1.1.3, A.1.1.5, A.1.1.1.

De manière plus générale, un événement Ek met en relation une date, un ou plusieurs identifiant de commande pour la ressource et un jeu de paramètre pour ces fonctions, établis d'après une valeur datée attribut. Autrement dit, il est possible d'établir une série temporelle Se pour tout profil décrivant la variation d'un attribut de ressource dans le temps.

L'exécution d'une série temporelle Se, c'est-à-dire l'appel du convertisseur avec une indication d'horizon temporel et l'appel chronologique de chaque fonction et paramètre de cette série, à la date adéquate, peut être réalisée, en partie et pour certaines ressources physiques au moins, par le gestionnaire PIM 200 en charge de cette ressource.

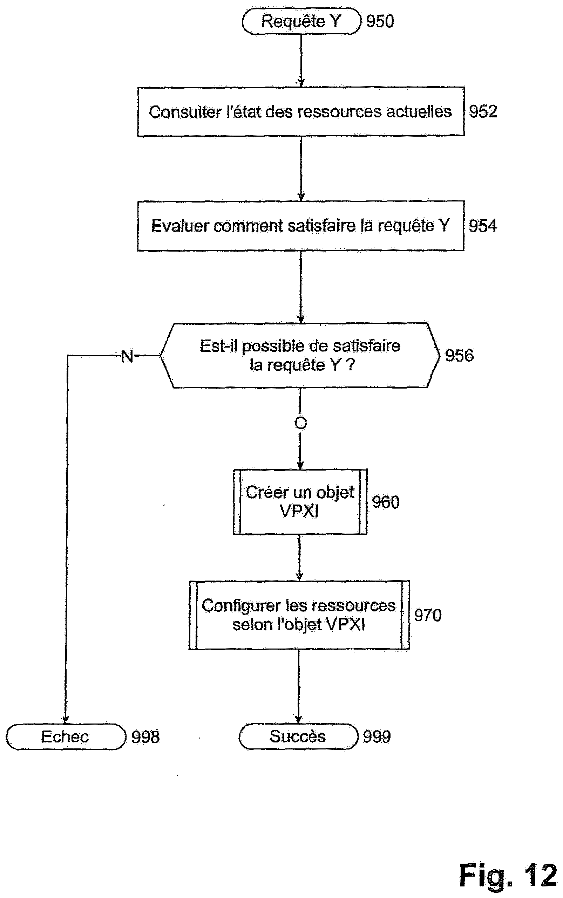

La figure 12 illustre le traitement d'une requête de réservation Y par le gestionnaire VIM 500.

En entrée, étape 950, le gestionnaire VIM 500 reçoit une requête Y. Cette requête comporte des indications de capacité fonctionnelle à réserver, y compris la fonction en elle-même et la "quantité" de cette fonction qui est visée, de période temporelle de réservation, ou au moins une date de début de réservation, et éventuellement de ressource visée (individualisée).

À l'étape 952, le gestionnaire VIM 500 consulte l'état des ressources de l'infrastructure VI, telles qu'elles figurent par exemple dans la description de ressource 901. Ceci peut être effectué à l'aide des profils de ressource contenus dans la base VRDB 502 et/ou RDB 402.

À l'étape 954, le gestionnaire VIM 401 évalue s'il est possible de satisfaire la requête Y, dans quel mesure, et comment. Cette étape 954 comprend une étape dans laquelle la requête Y est mise en forme, conformément à la représentation faite des ressources dans la base VRDB 502. Autrement dit, la requête Y est stockée à la manière de noeuds fonctionnels reliés entre eux par des liens de communication. La requête Y peut spécifier la capacité de chaque noeud fonctionnel et de chaque lien.

La mesure dans laquelle la requête Y peut être satisfaite sera décrite plus tard.

Si la requête Y ne peut être satisfaite, le gestionnaire VIM 500 retourne un échec de traitement de la requête à l'étape 998.

Au contraire, si la requête Y peut être satisfaite, le gestionnaire VIM 500 crée un objet dit "VPXI", à l'étape 960.

La création d'un objet VPXI de l'étape 960 comprend notamment la définition de l'objet VPXI en question, son stockage dans une structure organisée de données, et son attribution à l'utilisateur ayant généré la requête Y.

Avantageusement, la requête Y peut être soumise au gestionnaire VIM sous la forme d'un objet VPXI, par exemple à l'aide d'un langage à balises conforme au standard XML.

Ensuite, les ressources de l'infrastructure physique sont virtuellement allouées selon cet objet, à l'étape 970. Et le gestionnaire VIM 500 retourne un avis de succès à l'étape 999.

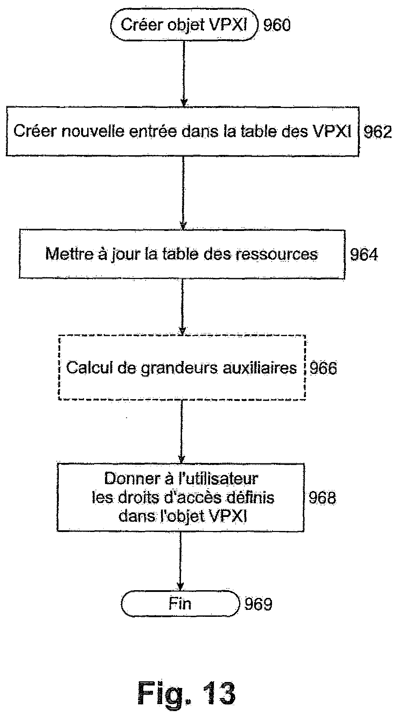

L'opération 960 de la figure 12 est illustrée de manière plus détaillée sur la figure 13.

La création d'un objet VPXI commence à l'étape 962 par la création d'une nouvelle entrée dans une table des VPXI, telle que représentée par exemple sur la figure 27. Pour chaque objet VPXI, cette table maintient en relation, entre autres choses, une donnée d'identifiant de l'objet VPXI, une donnée d'identifiant utilisateur, une description de cet objet, ou un lien vers une telle description, en termes de ressources (liens, noeuds et routeurs notamment), une liste de fonction de gestion et la topologie de l'objet VPXI.

Ensuite, à l'étape 964, la table des ressources de l'infrastructure est mise à jour. Cela comprend la mise en relation de chacune des ressources impliquées dans l'objet VPXI en question avec la donnée d'identifiant de cet objet VPXI, et la mise en conformité de son profil temporel de capacité. Cela inclut la création d'un fragment de capacité réservé (période de réservation) dans le profil de capacité de la ressource, attribué à l'objet VPXI en question. Cela implique généralement la création d'un noeud virtuel relié à l'objet VPXI et à une ressource physique.

L'opération 966 comprend le calcul de grandeurs auxiliaires. Cette opération est illustrée en traits tiretés car elle est optionnelle.

Cette étape 966 comprend notamment la mise à jour de variables globales, telles que la variable "capacité résiduelle globale" de l'infrastructure VI 400. De telles variables sont utilisées pour accélérer les phases d'allocation et d'ordonnancement sur lesquelles on reviendra plus loin. Par exemple, si la valeur associée à la capacité résiduelle globule est inférieure à une valeur plancher prédéfinie, le gestionnaire VIM 500 peut être configuré pour refuser le traitement de toute requête en réservation pour la période correspondante.

L'opération 968 vient ensuite donner à l'utilisateur les droits d'accès définis dans l'objet VPXI qui vient d'être créé. Dans un mode de réalisation avantageux, l'opération 968 comprend en outre le chargement de l'objet VPXI nouvellement crée sous la forme d'un démon.

L'étape 964 implique la mise à jour et/ou la création d'un objet VPXI 2710, et d'objets Vx node 2730, Vxlink 2740, Vxrouter 2750 et d'objets substrate node 2760, substrate link 2770 et substrate router 2780.

On aura compris que l'opération 968 constitue une réponse vers l'utilisateur, réponse qui fait suite à la requête que cet utilisateur a émise. Il existe aussi une réponse dans une requête de reprovision.

Et l'on arrive à la fin 969.

En parallèle, il faut configurer les ressources en conséquence de la requête que l'on vient d'accepter. L'accès de l'utilisateur aux ressources réservées est empêché jusqu'à la bonne configuration du système et, le cas échéant, avant la date de début de réservation et après la date de fin de réservation. Avec la réponse, le gestion renvoie une référence qui permet au client de retirer des éléments de contrôle d'accès qui ne seront actifs qu'aux moments adéquats.

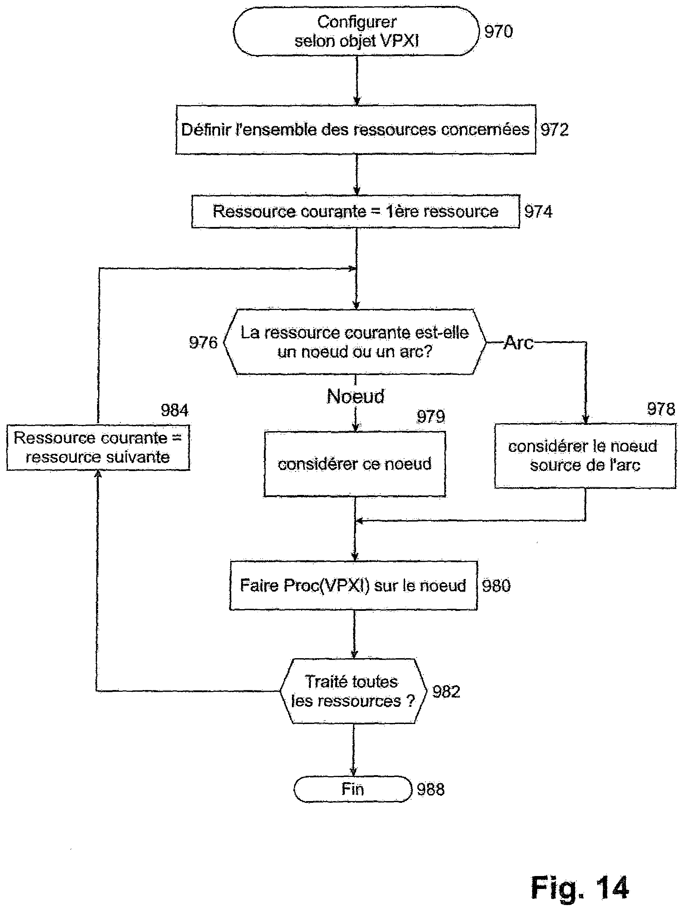

La figure 14 détaille l'étape 970 de la figure 13.

À l'étape 972, on recense l'ensemble des ressources concernées par l'objet VPXI, et qu'il y aura lieu de configurer. Ceci implique de consulter la liste des ressources maintenues en relation avec l'objet VPXI en question dans la base RVDB 502.

Ensuite, on commence une structure de boucle en établissant une première ressource comme ressource courante, au cours d'une étape 974. Ensuite, on détermine si cette ressource courante est un noeud ou un arc (ou lien), au cours d'une étape 976.

Si la ressource est un noeud, on va considérer ce noeud à l'étape 979. Si la ressource est un arc, on va considérer le noeud source de l'arc à l'étape 978. Le noeud source de l'arc est celui d'où part la communication effectuée sur l'arc ou lien considéré.

L'étape 980 consiste à appliquer au noeud des étapes 979 ou 978 un traitement défini particulièrement pour lui.

Dans un objet VPXI, ce traitement peut être considéré comme une procédure relative au noeud concerné, procédure qui est définie dans l'objet VPXI, par exemple par pointage d'une procédure particulière, avec des paramètres, parmi un ensemble prédéfini de procédures. Ceci implique généralement l'envoi au gestionnaire PIM 200 de commandes de pilotage. Ces commandes peuvent être vues comme le résultat d'appels de fonctions de pilotage, génériquement notées PILOT(), à effet sur le gestionnaire PIM 200, schématiquement représenté par la requête X décrite plus haut.

Par exemple, une procédure particulière peut correspondre au déploiement et au démarrage dynamiques d'une image de machine virtuelle VMi, avec système d'exploitation et programmes exécutables pré-compilés, sur une machine particulière Mk. Une telle procédure peut être désignée "Mk deploy(VMi)", et constitue un exemple de fonction CMD().

Toujours par exemple, une autre procédure particulière peut correspondre, pour un lien de transmission, à l'association d'un indicateur de lien virtuel (VLi) avec une capacité de service garantie (GARANTEED) et une valeur seuil de débit (MIN) sur le port Pk.

Une telle procédure peut être désignée "E. Link Config. (Pk, VLi, GARANTEED, MIN).

À chaque type de ressource correspond un ensemble, ou jeu, de procédures de configuration prédéfinies. Ces procédures de configuration sont transmises au noeud physique considéré soit directement, soit par l'intermédiaire du gestionnaire PIM.

Le test 982 détermine si toutes les ressources de objet VPXI ont été traitées. Si ce n'est pas le cas, on passe à la ressource suivante à l'étape 984, pour laquelle on réitère les étapes 976 à 982.

Quand toutes les ressources ont été traitées, on arrive à l'étape finale 988.

Le traitement de l'ensemble des ressources d'un objet VPXI peut être réalisé en parallèle, par ressource, étant donné que ces ressources peuvent en général être configurées de manière indépendante les unes des autres. Ceci permet d'accélérer globalement le traitement d'une requête Y.

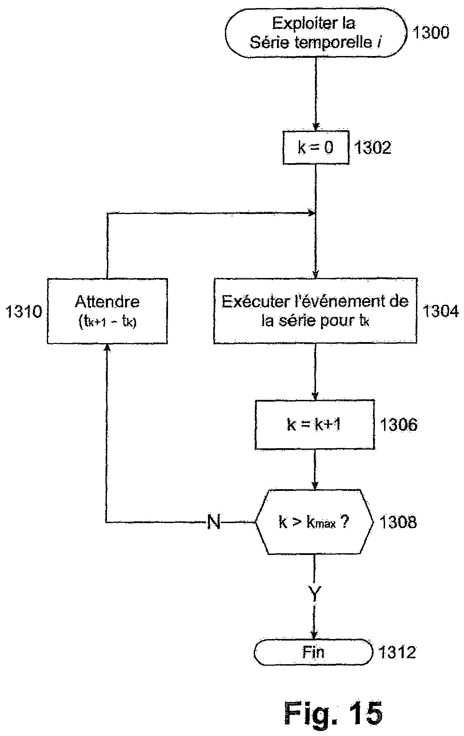

La figure 15 illustre comment on peut exploiter une "série temporelle *i*" donnée. Après l'entrée 1300, l'étape 1302 fixe à 0 (par exemple) la valeur d'un indice k. Ensuite, l'étape 1304 exécute l'événement défini dans la série temporelle, pour le temps Tₖ (t₀ pour k = 0). Ensuite, on passe à l'événement suivant, de rang k+1, de la série. Ceci est symbolisé en 1306 par le fait que l'on passe de k à k+1, (à ce stade de 0 à 1).

Le test 1308 détermine si l'on a dépassé la fin de la série. Dans le cas contraire, l'étape 1310 consiste en une attente pendant un temps égal à Tₖ₊₁ -Tₖ. Au terme de ce temps d'attente, on exécute l'événement de la série pour la nouvelle valeur de k, en 1304, et ainsi de suite, jusqu'à ce que le test 1308 permette de sortir vers l'étape de fin 1312.

Le dispositif chargé de l'exploitation d'une série temporelle peut être de matière différente suivant les capacités de la ressource physique considérée. Dans certains cas, par exemple lorsque la ressource impliquée comprend un ordinateur, la ressource exploite elle-même sa série temporelle. Dans d'autres cas, la ressource se contente de répondre aux appels de fonctions correspondant à chacun des événements (réception d'instructions uniquement).

Le convertisseur 914 est avantageusement exécuté sur le gestionnaire PIR 202.

Dans ce qui précède, on a considéré le fonctionnement du système de manière dynamique. En pratique, il convient de considérer également son initialisation.

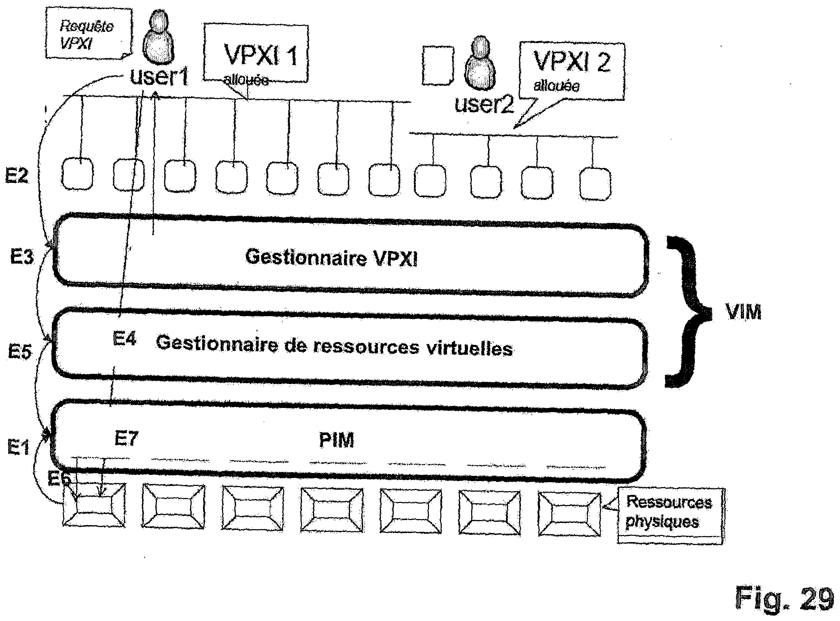

On fait référence à la figure 29 pour décrire ce processus d'initialisation.

À l'initialisation du système global, un démon de gestion VPXI est chargé ainsi qu'un ensemble de tables vierges.

Le gestionnaire VPXI embarque un module d'allocation de ressources qui permet d'établir tes noeud virtuels répondant à une requête VPXI. Un premier paramétrage, qui peut être manuel, consiste à renseigner les informations d'ordre général, dans les différentes tables.

Chaque démon de contrôle d'une ressource physique, à savoir chaque démon Substrate Node, Substrate Link et Substrate Router de la figure 28 suivant la nature de la ressource en question, est chargé et initialisé lors d'une opération d'enregistrement de cette ressource physique auprès de son gestionnaire PIM respectif 400.

Cet enregistrement, qui comprend le renseignement des informations nécessaires à la création d'un objet de type R, peut être automatique, par exemple résultant de l'exécution d'une série d'instructions sous la forme d'un code informatique, ou manuel, par intervention du propriétaire/gestionnaire de la ressource. Cet enregistrement déclenche l'initialisation des procédures de configuration propre à chaque ressource, en particulier des fonctions CTRL() et CMD().

Les démons VXnode, VXlink et VXrouter, qui agissent en tant que démons de pilotage de ressources virtuelles, sont chargés et initialisés dès ils sont alloués à une infrastructure VPXI par le gestionnaire de VPXI.

Les démons VPXI, qui contrôlent les différentes infrastructures VPXI, sont chargés et initialisés lors de l'activation de leur infrastructure VPXI respective.

La figure 29 montre que le système décrit fonctionne de manière globale suivant plusieurs grandes étapes:
- Une première étape E1 comprend l'enregistrement, ou la déclaration, des ressources dans ce que l'on pourrait appeler un "substrat" de ressources. Cet enregistrement se fait auprès du gestionnaire PIM 400 respectif de la ressource.
- Une seconde étape E2 correspond à la soumission d'une requête infrastructure VPXI par un utilisateur.
- Une troisième étape correspond à l'allocation d'une ou plusieurs ressources virtuelles par le gestionnaire VPXI du gestionnaire VIM 500 à un objet VPXI.
- Une quatrième étape E4 correspond à l'activation d'une infrastructure VPXI.
- Une cinquième étape E5 correspond à l'activation d'une fonction de pilotage des ressources virtuelles en fonction de leurs calendriers respectifs.
- Une sixième étape E6 correspond à l'activation d'une fonction de commande de ressource physique par l'intermédiaire du gestionnaire PIM, par exemple une fonction de configuration.
- Une septième étape E7 correspond à l'accès et à utilisation du fragment de la ressource physique par l'utilisateur.

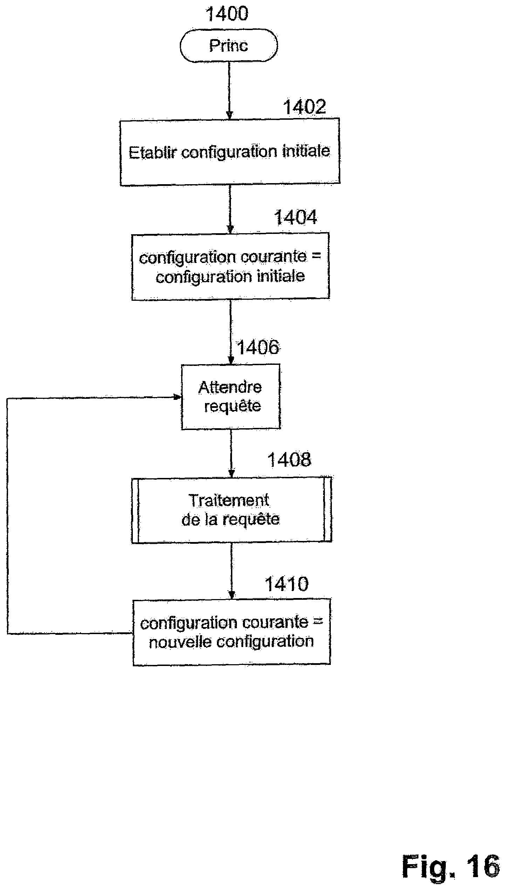

La figure 16 considère que cela est traité par une procédure principale. Après son départ 1400, celle-ci établit une configuration initiale, qui est en général prédéterminée, et fixe que cette configuration initiale est la configuration courante en 1404. Ensuite, on attend une requête en 1406. Lorsqu'arrive une requête, elle est traitée de la manière indiquée précédemment en 1408. Il en résulte une nouvelle configuration, qui est établie comme configuration courante en 1410, après quoi on retourne en 1406 pour atteindre la requête suivante.

On a vu que la création d'un objet VPXI implique la réservation de fragments de capacité dans les profils de capacité de chacune des ressources concernées par cet objet VPXI. De la même manière qu'une ressource physique ou virtuelle présente un profil temporel de capacité, tout objet VPXI peut présenter lui aussi un profil temporel de capacité, correspondant à l'agrégation des fragments de capacité des ressources qui le constitue. Le profil de l'objet VPXI peut en particulier comprendre un fragment réservé ensuite d'une requête d'objet VPXI, un fragment de capacité disponible, ou à réserver, un fragment de capacité "best effort" utilisable, sans autre garantie par tout utilisateur de l'infrastructure. Ce profil temporel, ou du moins un lien vers ce profil, peut être maintenu dans la structure de stockage qui mémorise les objets VPXI. Et ce profil temporel peut être soumis au convertisseur pour obtenir à chaque fois une série temporelle.

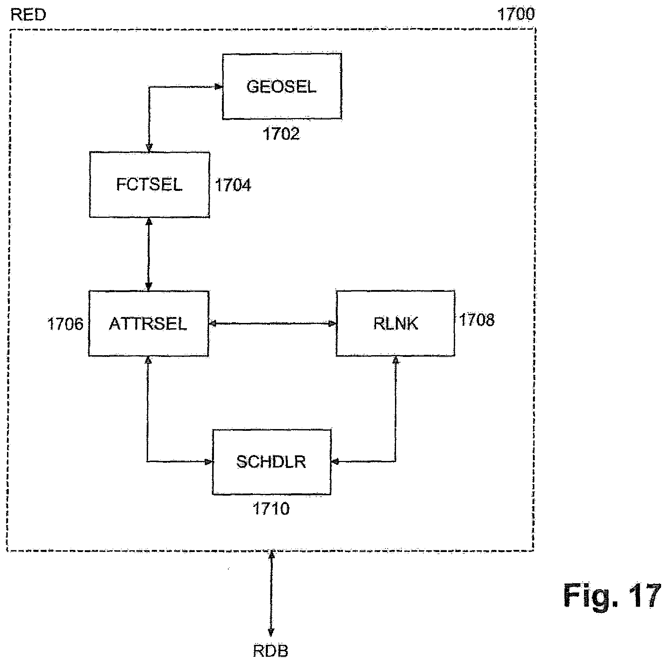

Comme le montre la figure 17, le gestionnaire VIM 500 comprend un dispositif d'évaluation de requête, désigné dispositif RED 1700, capable d'interaction avec la base VRDB 502 pour déterminer si une requête Y qui lui est soumise peut être satisfaite, et dans quelle mesure. Ce dispositif peut prendre la forme d'un module informatique au moins partiellement exécuté sur le gestionnaire VIM 500. En particulier, ce module peut prendre la forme d'un démon. Ce module peut également être désigné module d'allocation de ressources, ou module Vx alloc.

Le dispositif RED 700 comprend un outil de sélection géographique de ressources, ou outil GEOCEL 1702, adapté pour sélectionner un sous-ensemble de ressources de la base VRDB 502 selon un ou plusieurs critères géographiques, tirés de la requête Y. En complément, ou en supplément, la sélection du sous-ensemble de ressources peut prendre en compte des critères politiques (appartenance à une Nation, un pays, un gouvernement, une institution ou autres).

Le dispositif RED 1700 comprend en outre un outil de sélection fonctionnel de ressources, ou outil FCTSEL 1704, adapté pour sélectionner certaines des ressources de la base VRDB 502 en fonction d'attributs fonctionnels maintenus dans la base en relation avec les ressources en question. En particulier, l'outil FCTSEL 1704 est agencé pour établir cette sélection parmi un sous-ensemble de ressources sélectionné par l'outil GEOSEL 1702.

Le dispositif RED 1700 comprend encore un outil de sélection de ressources par attribut, ou outil ATTRSEL 1706, adapté pour recevoir une partie au moins de la requête Y, et pour établir en sortie un sous-ensemble de ressources de la base VRDB 502, sélectionné sur la base d'attributs maintenus dans cette base VRDB 402 en relation avec les ressources en question. En particulier, l'outil ATTRSEL 1706 est agencé pour établir cette sélection parmi un sous-ensemble de ressources sélectionné par l'outil FCTSEL 1704.

Le dispositif RED 1700 comprend encore un outil de sélection de liens, ou outil RLNK 1708, adapté pour recevoir un ensemble de liens et de ressources en entrée, et pour délivrer en sortie un sous-ensemble de liens sélectionnés. L'outil RNLK 1708 peut travailler sur un sous-ensemble de liens et de ressources sélectionnés par l'outil ATTRSEL 1706.

Le dispositif RED 1700 comprend enfin un outil de planification, ou outil SCHDLR 1710, adapté pour recevoir un ensemble de ressources et de liens, et pour établir en tant que sortie un sous-ensemble optimisé desdites ressources et liens, sur la base d'une minimisation des coûts en fonction de critères choisis. L'outil SCHDLR 1702. est agencé pour travailler sur un sous-ensemble de liens et de ressources issu de l'outil RNLK 1708 et/ou de l'outil ATTRSEL 1706.

L'ensemble formé de l'outil GEOSEL 1702, de l'outil FCTSEL 1704, de l'outil ATTRSEL 1706 et de l'outil ATTRSEL 1706 et de l'outil RLNK 1708, entre autres, peut être vu, globalement comme un outil de sélection de ressources, ou "sélection de ressource".

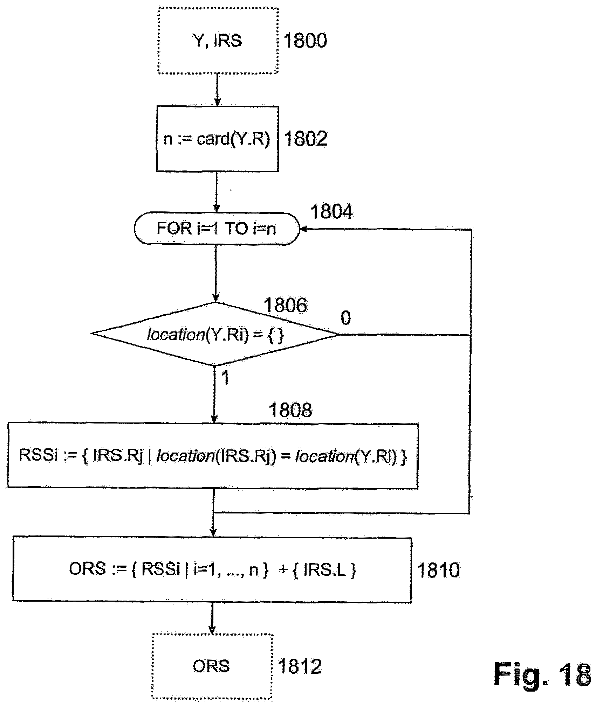

La figure 18 illustre une première fonction de l'outil GEOSEL 1702.

À l'étape initiale 1800, l'outil GEOSEL 1702 reçoit en entrée la requête Y, ou une partie au moins de cette dernière, ainsi qu'un sous-ensemble de ressources, ou ensemble de ressources d'entrée, ou ensemble IRS, de la base VRDB 502.

Dans un mode de réalisation préférentiel, l'outil GEOSEL 1702 est appelé préalablement aux autres outils de sélection du dispositif RED 1700, en sorte que l'ensemble IRS correspond sensiblement à l'ensemble de la base VRDB 502.

À l'étape 1802, on établit le nombre, noté *n*, de ressources visées par la requête Y, à l'exclusion des liens. L'ensemble de ces ressources, liens exclus, est noté Y.R pour la requête Y.

À l'étape 1804, une boucle est initiée sur la variable muette "*i*", laquelle évolue de l à n par incrément unitaire.

À l'étape 1806, on appelle une fonction *location* pour une ressource particulière, notée Ri, de la requête Y. Cette fonction, définie à l'annexe A.2.1, retourne un attribut de localisation maintenu dans la requête Y en relation avec la ressource Ri.

Cet attribut de localisation peut être explicite, c'est-à-dire explicite par l'utilisateur qui a émis la requête Y. Cet attribut de localisation peut également être implicite, c'est-à-dire déduit d'informations sur l'utilisateur en question, connues du système, et/ou de la connaissance d'utilisateurs ou de ressources situés à proximité de l'utilïsateur/émetteur de la requête Y.

À l'étape 1806, on teste si la fonction location a retourné un ensemble vide ou non.

Si le test de l'étape 1806 est positif, c'est-à-dire si aucun attribut de localisation n'est associé à la ressource Ri de la requête Y, alors on traite la ressource Y,Ri suivante (la variable "i" est incrémentée).

Si le test de l'étape 1806 est négatif, c'est-à-dire s'il existe un attribut de localisation en relation avec la ressource Y.Ri, alors on sélectionne, à l'étape 1808, un sous-ensemble de ressources-résultat pour la ressource Y.Ri, ou sous-ensemble RSSi, comprenant l'ensemble des ressources Rj de l'ensemble IRS dont l'attribut de localisation, tel que renvoyé par la fonctions *location,* correspond à l'attribut de localisation de la ressource Ri de la requête Y.

Et les étapes 1806 et 1808 sont recommencées pour la ressource Y.Ri suivante.

À l'étape 1810, on établit un ensemble de ressources de sortie, ou ensemble ORS, comprenant chacun des sous-ensembles RSSi, ainsi que les liens de l'ensemble IRS notées dans leur ensemble IRS.L.

À l'étape 1812, l'outil GEOSEL 1702 retourne l'ensemble OSR en tant que résultat.

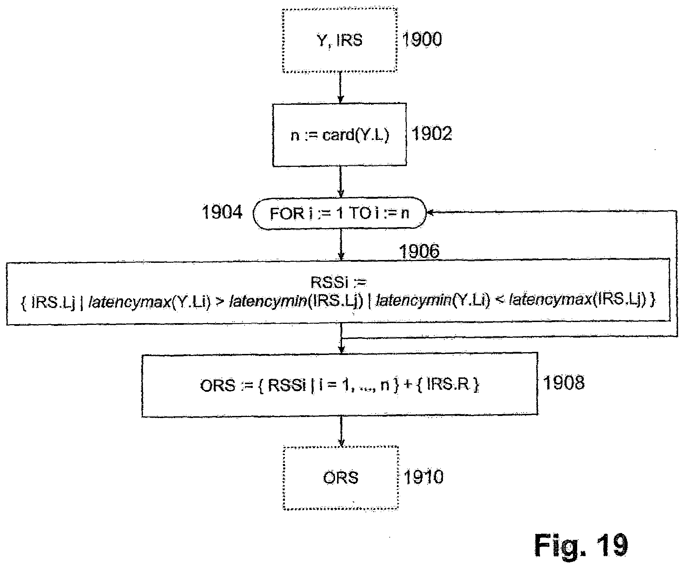

La figure 19 illustre une seconde fonction de l'outil GEOSEL 1702.

À l'étape 1900, cette seconde fonction de l'outil GEOSEL 1702 reçoit une requête Y, et un ensemble de ressources d'entrée, ou ensemble IRS.

Dans un mode de réalisation préférentiel, l'ensemble IRS de l'étape 1900 correspond à l'ensemble OSR délivré en sortie de la première fonctionne l'outil GEOSEL 1702.

À l'étape 1902, on détermine le nombre, noté *n* de liens Li contenus dans la requête Y. L'ensemble des liens visés dans la requête Y est noté Y.L.

À l'étape 1904, on débute une boucle portant sur la variable muette "*i*", laquelle est incrémentée unitairement de 1 à *n*.

À l'étape 1906, on détermine un sous-ensemble-résultat RSSi pour un lien particulier, noté lien Li. Le sous-ensemble RSSi comprend les liens Lj de l'ensemble IRS tels que :
- le résultat de l'appel de la fonction *Latencymax* pour le lien Li de la requête Y est supérieur au résultat de l'appel de la *fonction Latencymin* pour le lien Lj en question, et tel que
- l'appel de la fonction *Latencymin* pour le lien Li de la requête Y est inférieur au résultat de l'appel de fonction *Latencymax* pour ce lien Lj.

Les fonctions *Latencymax* et *Latencymin* sont respectivement définies aux annexes A.2.2 et A.2.3.

L'étape 1906 est recommencée pour le lien Li suivant (la variable muette *i* est incrémentée de 1).

À l'issue de la boucle, à l'étape 1908, on définit un ensemble-résultat de ressources, noté OSR. L'ensemble OSR comprend chacun des sous-ensembles RSSi, ainsi que les ressources, hormis les liens, de l'ensemble ISR, notées dans leur ensemble ISR.R.

À l'étape 1910, l'ensemble ORS est retourné en tant que résultat de la seconde fonction de l'outil GEOSEL 1702.

La figure z0 illustre le fonctionnement de l'outil FCTSEL 1704.

À l'étape 2000, l'outil FCTSEL 1704 reçoit une requête Y et un ensemble de ressources d'entrée, noté IRS.

Dans un mode de réalisation préféré, l'ensemble IRS reçu à l'étape 2000 correspond à l'ensemble ORS délivré en sortie de l'outil GEOSEL 1702, en particulier de la seconde fonction de cet outil.

À l'étape 2002, on établit le nombre *n* de ressources R visées par la requête Y, hors liens. L'ensemble de ces ressources est noté Y.R.

À l'étape 2004, on débute une boucle sur la variable muette "i", laquelle est incrémentée unitairement de 1 à *n*.

Pour une ressource particulière, notée Ri, de la requête Y, on appelle la fonction *function* définie en annexe A.2.4. Si le résultat de cet appel est l'ensemble vide (étape 2006), alors cette étape 2006 est recommencée pour l'objet Ri suivant.

Sinon, à l'étape 2008, on établit le nombre, noté *m*, de fonctions retournées par l'appel de la fonction *function*.

À l'étape 2010, on débute une boucle sur la variable muette j, laquelle est incrémentée unitairement de 1 *à m.*

Pour une fonction particulière, notée Fj, on établit le sous-ensemble de ressources-résultat pour la fonction Fj de la ressource Ri, noté RSSij. Le sous-ensemble RSSij comprend les ressources Rk de l'ensemble IRS dont l'une des fonctions associées, notée Fl, correspond à la jonction Fj en question, Ceci constitue l'étape 2012.

Ensuite, on recommence l'étape 2012 pour la fonction Fj suivante de la même ressource Ri.

À l'étape 2014, on établit un sous-ensemble de ressources-résultat pour la ressource Ri, noté RSSi. Le sous-ensemble RSSi comprend chacun des sous-ensembles RSSij.

Ensuite, les étapes 2006 à 2014 sont recommencées pour la ressource Ri suivante.

À l'étape 2016, on établit ressemble-résultat OSR, comprenant le sous-ensemble RSSi de chacune des ressources Ri, ainsi que l'ensemble des liens de l'ensemble ISR, noté IRS.L.

Finalement, à l'étape 2018, l'ensemble OSR est renvoyé en tant que résultat.

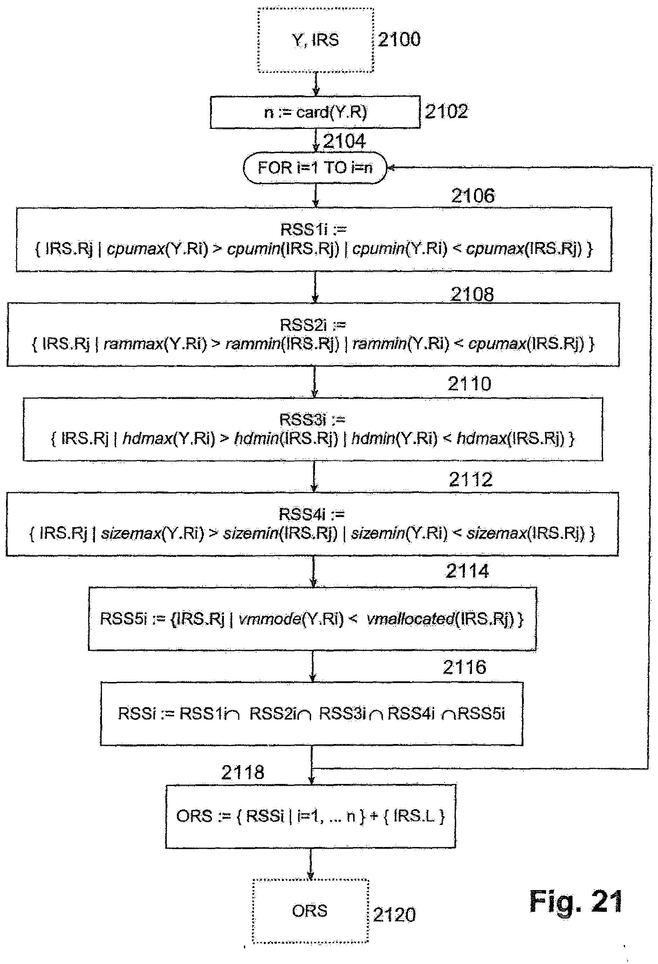

La figure 21 illustre une première fonction de l'outil ATTRSEL 1706.

À l'étape 1702. l'outil ATTRSEL 1706 reçoit la requête Y et un ensemble de ressources IRS. L'ensemble IRS reçu à l'étape 2100 peut être correspondre à l'ensemble ORS délivré par la fonction FCTSEL 1704, ou non.

À l'étape 2102, on déterminé le nombre *n* de ressources R, liens exclus, visés par la requête Y.

À l'étape 2104, on initie une boucle portant sur la variable muette "i", laquelle va être incrémentée unitairement de 1 à *n*.

À l'étape 2106, on détermine un premier sous-ensemble de ressources-résultats RSSli pour une ressource particulière, notée Ri. Ce sous-ensemble RSSli comprend les ressources Rj de l'ensemble IRS telles que :
- le résultat de l'appel de la fonction *cpumax,* telle que définie en annexe 2.3.6, pour la ressource Ri de la requête Y est supérieure au résultat de rappel de la fonction *cpumin*, telle que définie en annexe A.3.7, pour la ressource Rj en question, et telles que
- le résultat de l'appel de la fonction *cpumin* pour la ressource Ri de la requête Y est inférieur au résultat de l'appel de la fonction *cpumar* pour la ressource Rj de l'ensemble IRS.

À l'étape 2108, on détermine un second sous-ensemble de ressources-résultats RSS2i pour la ressource Ri, comprenant l'ensemble des ressources Rj de l'ensemble IRS telles que :
- le résultat de l'appel de la fonction *rammax*, telle que définie en annexe 2.3.8, pour la ressource Ri est supérieure au résultat de appel de la fonction *rammin,* telle que défnie en annexe A.2.3.9, sur la ressource Rj en question, et telles que
- le résultat de l'appel de la fonction *rammin* pour la ressource Ri est inférieur au résultat de appel de la fonction *rammax* pour la ressource Rj.
À l'étape 2110, on détermine un troisième sous-ensemble de ressources-résultats RSS3i pour la ressource Ri comprenant l'ensemble des ressources Rj de l'ensemble IRS telles que :
- le résultat de rappel de la fonction *hdmax,* telle que définie en annexe 1.3.10, pour la ressource Ri est supérieur au résultat de l'appel de la fonction *hdmin,* telle que définie à l'annexe 1.3.11, pour la ressource Rj en question, et telles que
- le résultat de l'appel de la fonction *hdmin* sur la ressource Ri est inférieur au résultat de l'appel de la fonction *hdmax* pour cette ressource Rj.

À l'étape 2112, on détermine un quatrième sous-ensemble de ressources-résultats RSS4i pour la ressource Ri, comprenant l'ensemble des ressources Rj de l'ensemble IRS telles que :
- le résultat de appel de la fonction *sizemax,* telle que définie à l'annexe A.3.12, pour la ressource Ri est supérieur au résultat de l'appel de la fonction *sizemin,* telle que définie à l'annexe 3.13, pour la ressource Rj en question, et telles que
- le résultat de l'appel de la fonction sizemin pour la ressource Ri est inférieur au résultat de l'appel de la fonction sizemax pour cette ressource Rj.

À l'étape 2114, on détermine un cinquième sous-ensemble de ressources-résultats RSS5i pour la ressource Ri, comprenant l'ensemble des ressources Rj de l'ensemble IRS telles que :
- le résultat de l'appel de la fonction *vmmode*, telle que définie à l'annexe A.3.13, pour la ressource Ri est inférieur au résultat de l'appel de la fonction *vmallocated,* telle que définie à l'annexe 1.3.14, pour la ressource Rj en question.

À l'étape 2116, on définit un sous-ensemble-résultat RSSi pour la ressource Ri. Ce sous-ensemble RSSi comprend l'intersection des ensembles SR1i, SR2i, SR3i, SR4i et SR5i pour la ressource Ri.

À l'étape 2118, on définit un ensemble de ressources-résultats OSR comprenant chacun des sous-ensembles RSSi correspondant aux ressources Ri de la requête Y ainsi que l'ensemble des liens de l'ensemble IRS, noté IRS.L.

Finalement, à l'étape 2120, on retourne l'ensemble OSR en tant que résultat.

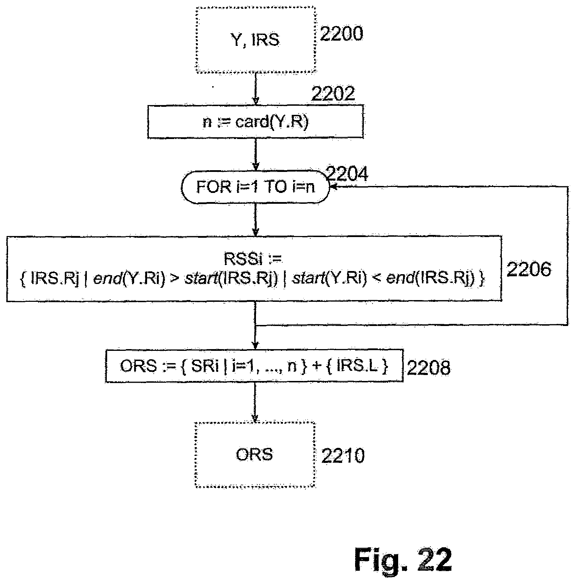

La figure 22 illustre une seconde fonction de l'outil ATTRSEL 1706.

À l'étape 2200, cette seconde fonction de l'outil ATTREL 1706 reçoit la requête Y et un ensemble de ressources IRS.

De préférence, l'ensemble IRS reçu à l'étape 2200 correspond à l'ensemble OSR résultant de l'appel de la première fonction de l'outil ATTRSEL 1706.

À l'étape 2202, on établit le nombre n de ressources Ri concernées par la requête Y.

À l'étape 2204, on initie une boucle portant sur la variable muette "*i*" laquelle varie de 1 à n par incrément de "1" ("un").

À l'étape 2206, on établit un sous-ensemble de ressources-résultats RSSi pour une ressource particulière, notée Ri. Le sous-ensemble RSSi comprend l'ensemble des ressources Rj de l'ensemble IRS telles que :
- le résultat de appel de la fonction *end,* telle que définie à l'annexe A.3.15, pour la ressource Ri est supérieure au résultat de l'appel de la function *start,* telle que définie à l'annexe A.3.16, pour la ressource Rj en question, et telle que :
- le résultat de l'appel de la fonction *start* pour la ressource Ri est inférieur au résultat de l'appel de la fonction *end* pour la ressource Rj.

Ensuite, l'étape 2206 est recommencée pour la ressource Ri suivante.

À l'étape 2208, on définit un sous-ensemble de ressources-résultats OSR comprenant le sous-ensemble RSSi de chacune des ressources Ri de la requête Y, ainsi que l'ensemble des liaisons de l'ensemble IRS, noté IRS.L.

À l'étape 2210, on retourne l'ensemble ORS en tant que résultat.

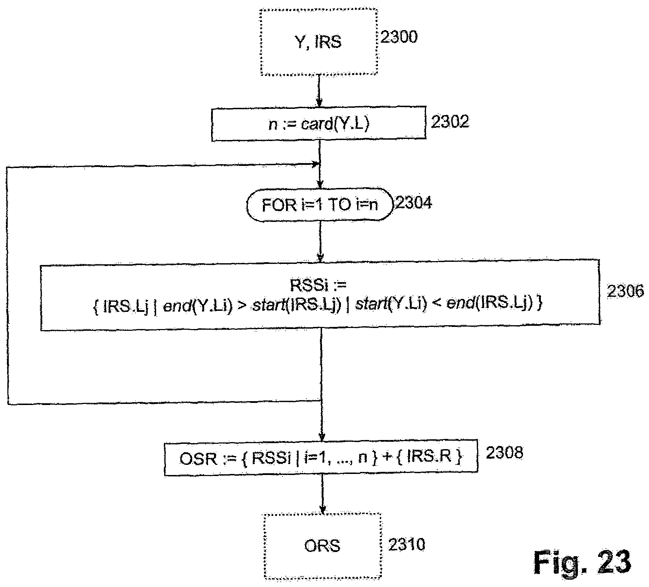

La figure 23 illustre une troisième fonction de l'outil ATTRSEL 1706.

À l'étape 2300, la troisième fonction de l'outil ATTRSEL 1706 reçoit une requête Y et un ensemble de ressources IRS.

De préférence, l'ensemble de ressources IRS reçu à l'étape 2300 correspond à l'ensemble OSR résultant de l'appel de la seconde fonction de l'outil ATTRSEL 1706.

À l'étape 2302, on détermine le nombre *n* de liens L visés par la requête Y.

À l'étape 2304, on initie une boucle sur la variable muette "i", celle-ci variant de 1 à *n* par incréments de "1".

À l'étape 2306, on détermine un sous-ensemble de ressources-résultat RSSi pour le lien Li, comprenant l'ensemble des liaisons Lj de l'ensemble IRS tels que :
- le résultat de l'appel de la fonction *end* sur la liaison Li est supérieur au résultat de l'appel de la fonction *start* sur la liaison Lj de l'ensemble IRS. et tel que
- le résultat de l'appel de la fonction start sur la liaison Li est inférieur au résultat de l'appel de la fonction end sur la liaison Lj de l'ensemble IRS.

L'étape 2306 est ensuite recommencée pour le lien Li de la requête Y suivant.

À l'étape 2308, on définit un ensemble de ressources-résultats OSR comprenant le sous-ensemble RSSi de chacun des liens Li de la requête Y, ainsi que l'ensemble des ressources de l'ensemble IRS. noté IRS.R.

Finalement, à l'étape 2310, l'ensemble ORS est retourné en tant que résultat.

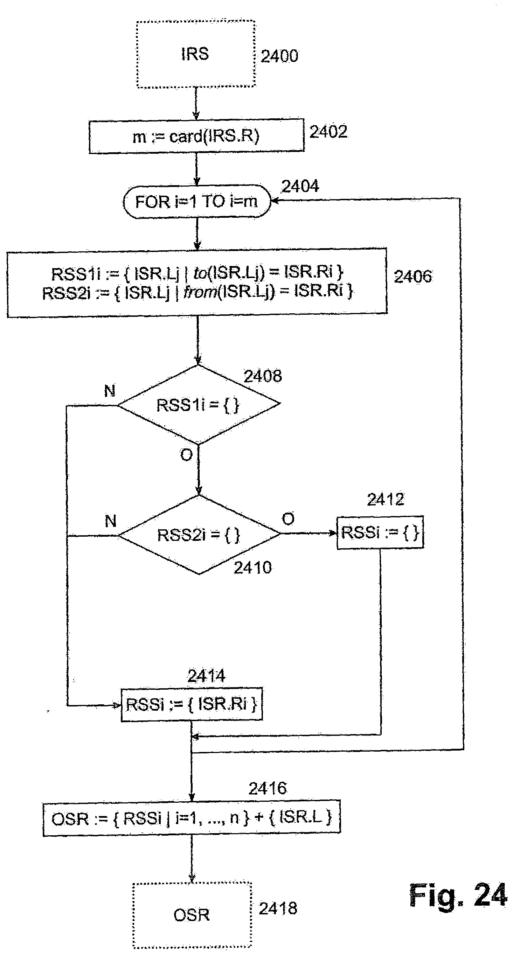

La figure 24 illustre une première fonction de l'outil RLNK 1708.

À l'étape 2400, la fonction RLNK reçoit un ensemble de ressources IRS.

L'ensemble de ressources IRS reçu à l'étape 2400 peut résulter de l'appel l'une des fonctions de l'outil ATTRSEL 1706, en particulier de la troisième fonction de cet outil.

À l'étape 2402, on détermine le nombre *m* de ressources, hormis les liens, comprises dans l'ensemble IRS.

À l'étape 2404, on initie une boucle portant sur la valable muette "i", celle-ci variant de 1 à m.

Pour une ressource particulière Ri, on détermine un premier sous-ensemble de ressources-résultat RSSi 1 comprenant les liens Lj de l'ensemble IRS tels que l'appel de la fonction *to,* telle que définie en annexe A.3.17, pour ce lien Lj est égal à la ressource Ri.

On détermine ensuite, toujours au cours de cette étape 2406 et pour la ressource Ri en question, un second sous-ensemble de ressources-résultat RSS2i comprenant les liaisons Lj de l'ensemble IRS telles que le résultat de l'appel de la fonction *from*, telle que définie à l'annexe A.3.18 pour cette liaison Lj a pour résultat la ressource Ri.

À l'étape 2408, on réalise un test pour savoir si l'ensemble RSS1i est vide ou non.

Si oui, on passe à l'étape 2410 qui vise à déterminer si l'ensemble RSS2i est vide ou non.

Si oui, on passe à l'étape 2412 dans laquelle on définit un sous-ensemble de ressources-résultats RSSi pour la ressource Ri, lequel vaut l'ensemble vide. Et on recommence les étapes 2406 et suivantes pour la ressource Ri suivante de l'ensemble IRS.

Dans le cas où le test de l'étape 2408 est négatif, comme dans le cas où le test de l'étape 2410 est négatif, on passe à l'étape 2414 au cours de laquelle l'ensemble RSSi pour la ressource Ri est défini et comprend la ressource Ri de l'ensemble IRS en question. Puis, on recommence les étapes 2406 et suivantes pour la ressource Ri suivante de l'ensemble IRS.

À la fin de cette boucle, à l'étape 2416, on définit l'ensemble de ressources-résultats OSR, lequel comprend chacun des sous-ensembles RSSi ainsi que l'ensemble des liens de l'ensemble IRS, noté IRS.L.

Finalement, à l'étape 2418, l'objet OSR est délivré en tant que résultat.

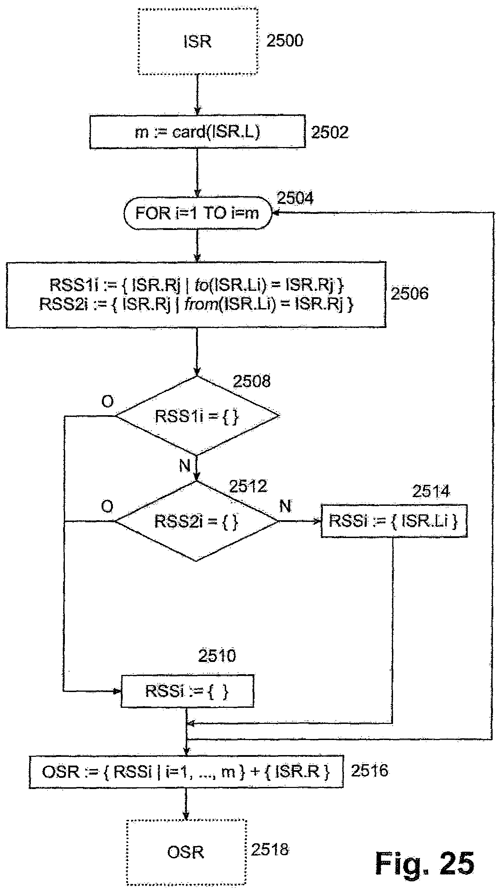

La figure 25 illustre une seconde fonction de l'outil RLNK 1708.

À l'étape 2500, cette seconde fonction reçoit un ensemble de ressources d'entrée ISR.

À l'étape 2502, on détermine à la fois le nombre, noté *m,* de liens compris dans l'ensemble ISR.

À l'étape 2504, on initie une boucle portant sur la variable muette "*i*", laquelle est unitairement incrémentée de 1 à m.

Pour une liaison particulière, notée Li, de l'ensemble ISR, on détermine, à l'étape 2506 :
- un premier sous-ensemble de ressources, noté RSS1i, pour le lien Li, comprenant les ressources Rj, hormis les liens, de l'ensemble ISR telles que le résultat de l'appel de la fonction *to* pour la liaison Li considérée correspond à cette ressource Rj, et
- un second sous-ensemble de ressources, noté RSS2i, pour ce lien Li, comprenant les ressources Rj, hormis les liens, de l'ensemble ISR correspondant au résultat de l'appel de la fonction *from* sur la liaison Li.

À l'étape 2508, on vérifie si le sous-ensemble RSS1i est vide ou non.

Si oui, on passe à l'étape 2510, dans laquelle on crée un sous-ensemble de ressources-résultats, noté RSSi, pour le lien. Le sous-ensemble RSSi est établi comme étant vide.

Sinon, au cours de l'étape 2512, on vérifie si le sous-ensemble RSS2i est vide ou non.

Si oui, on passe à l'étape 2510. Sinon, on passe à l'étape 2514, dans laquelle on crée un sous-ensemble RSSi que l'on établit comme comprenant la liaison Li en question.

Ensuite, on recommence les étapes 2506 et suivantes pour la liaison Li suivante de l'ensemble ISR.

À l'issue de la boucle initiée à l'étape 2504, on définit un ensemble de ressources-résultats OSR. L'ensemble OSR comprend le sous-ensemble RSSi correspondant à chacun des liens Li de l'ensemble ISR, ainsi que l'ensemble des ressources, à l'exclusion des liens, de cet ensemble ISR, noté globalement ISR.R.

Finalement, à l'étape 2518, l'ensemble OSR est retourné en tant que résultat.

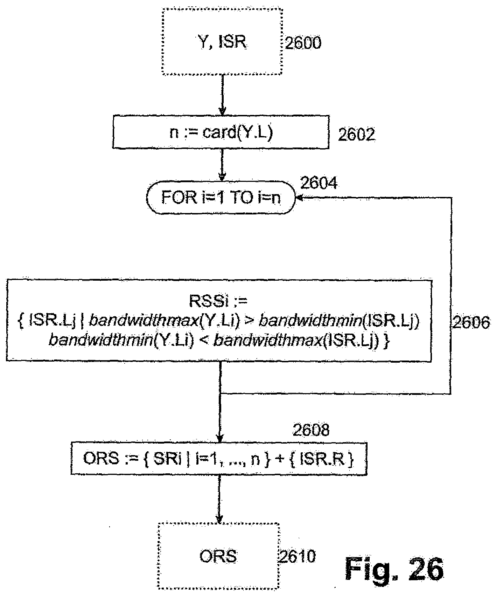

La figure 26 illustre une troisième fonction de l'outil RLNK 1708.

À l'étape 2600, la function en question reçoit la requête Y et un ensemble de ressources d'entrée ISR.

À l'étape 2602, on détermine le nombre, noté *n*, de liens visés par la requête Y.

À l'étape 2604, on initie une boucle sur la variable muette "i", laquelle va être incrémentée de 1 *à n.*

Pour chaque lieu génétiquement noté Li, de la requête Y, on détermine un sous-ensemble de ressources-résultats, noté RSSi, comprenant les liens Lj de l'/ensemble IRS tels que :
- le résultat de l'appel de la fonction *bandwidthmax,* telle que définie à l'annexe A,3.18, pour le lien Li de la requête Y soit supérieur au résultat de l'appel de la fonction *bandwidthmin,* telle que définie en annexe A3.19, sur le lien Lj en question, et tels que,
- le résultat de l'appel de la fonction *bandwidthmin* sur le lien Li de la requête Y soit intérieur au résultat de l'appel de la fonction *bandwidthmax* sur le lien Lj en question.

Ceci se fait au cours de l'étape 2606.

L'étape 2606 est ensuite recommencée pour le lien Li suivant de la requête Y.

À l'étape 2608, on définit un ensemble de ressources-résultats OSR comprenant le sous-ensemble RSSi correspondant à chacun des liens Li de la requête Y, ainsi que l'ensemble des ressources, noté ISR.R, hors liens, de l'ensemble ISR.

Finalement, à l'étape 2610, on renvoie l'ensemble ORS en tant que résultat.

La figure 27 illustre le fonctionnement de l'outil SCHDLR 1710.

À l'étape 2700, on reçoit la requête Y et un sous-ensemble de ressources virtuelles ISR. De préférence, ce sous-ensemble ISR résulte de l'appel successif des fonctions RNLK et ATTRSEL, en sorte que le sous-ensemble ISR comprend seulement des noeuds et des lien susceptibles de répondre, éventuellement en combinaison les uns des autres, à la requête Y.

À l'étape 2702, on considère le profil capacitif de chacune des ressources du sous-ensemble ISR. Ceci implique généralement une interrogation de la base VRDB 302.

À l'étape 2704, on détermine s'il existe dans le sous-ensemble ISR une solution à la requête Y qui soit compatible avec les profils capacitifs respectifs des ressources. Autrement dit, pour chacune des ressources du sous-ensemble ISR, on détermine si son profil capacitif autorise une réservation convenable en termes de date/durée et de capacité. Finalement, on détermine un sous-ensemble de solutions pour la requête Y.

Si l'ensemble des solutions est vide, alors, à l'étape 2706, on retourne un profil capacitif vide.

À l'étape 2708, qui fait suite à l'étape 2704, on détermine s'il existe une solution ou plusieurs à la requête Y.

S'il existe une unique solution, on retourne à l'étape 2710 un ensemble de profils capacitifs mis à jours, c'est-à-dire contenant les réservations nécessaires, en capacité et en temps. Et l'on crée l'objet VPXI adéquat dans la table des VPXI.

S'il existe plusieurs solutions, on lance une procédure d'optimisation pour déterminer laquelle des solutions de l'ensemble de l'étape 2704 répondent le mieux à des critères prédéterminés. Ces critères concernent essentiellement la gestion des infrastructures dans leur ensemble.

Dans l'exemple de réalisation illustré par la figure 27, le module SCHDLR 1710 met en oeuvre un algorithme d'ordonnancement requête par requête. Ce module SCHDLR 1710 peut également être agencé de manière à traiter ensemble plusieurs requêtes du type de la requête Y. Autrement dit, le module SCHDLR 1710 peut fonctionner par lots.

L'étape d'optimisation 2712 vise à définir la meilleure période temporelle pour effectuer l'ensemble des réservations de capacité des ressources impliquées dans la ou les requêtes Y. Ceci s'apparente à un problème d'ordonnancement

Pour cette optimisation, on peut faire appel à un programme linéaire adapté pour optimiser une fonction dite "objectif" prédéfinie par le gestionnaire du système de virtualisation d'infrastructure, ici le gestionnaire VIM 500. Une fonction "objectif" peut ainsi constater à maximiser le nombre de requêtes Y acceptées. Selon la distribution statistique des requêtes, une telle maximisation pourrait être obtenue en allouant la capacité minimale à chaque requête sur la plus grande période de temps, du moins pour les requêtes spécifiant une capacité intégrale.

L'étape d'optimisation 2712 peut faire appel à un ordonnanceur plus complexe, par exemple adapté pour optimiser simultanément plusieurs critères tels que la satisfaction utilisateur, l'utilisation des ressources, la consommation d'énergie, le coût monétaire pour le client ou analogues.

On en revient ensuite à l'étape 2710.

L'invention ne saurait être limitée à un algorithme d'ordonnancement particulier. En pratique, tout ordonnanceur capable d'établir les profils de réservation de ressource à partir d'un ensemble de ressources peut être utilisé ici.

Des exemples d'algorithmes applicables sont proposés dans les articles référencés ci-dessus. Ces algorithmes ont été en général optimisés pour la réservation de bande passante ou l'ordonnancement de requêtes de transfert de données. Ces algorithmes ont notamment été implantés dans le logiciel "open source" ("sources libres" en français) jBDTS déposé à l'Agence pour la protection des programmes, ou APP, sous le numéro IDDN.FR.001.220025.000.S.P.2008.000.10700, et VXscheduler déposé à l'AFP *sous* le numéro IDDN.FR.001.290010.000.S.P.2009.000.10800.

Le fonctionnement optimal du système nécessite que les différents éléments constitutifs de l'infrastructure virtuelle 500 soient synchronisés entre eux.

À tout le moins, cela impose que le gestionnaire VIM 500, chacun des gestionnaires PI-i 200-i et chaque dispositif exécutant lui-même des séries Se soient synchronisés entre eux. Ceci peut être fait au moyen d'un dispositif de synchronisation, reliant donc les modules responsables de l'interprétation des profils temporels, de l'exécution des séries temporelles et des contrôleurs opérant les changements au sein des équipements de l'infrastructure. Ce dispositif peut comprendre une ou plusieurs horloges globales de type GPS, un serveur NTP et des clients NTP, une horloge globale distribuée, par exemple réalisée sous la forme d'un logiciel; qui est construite et resynchronisée à partir d'une quelconque source temporelle physique.

On vient de décrire un outil aidant à l'exploitation d'un réseau d'équipements physiques interconnectés possédant chacun des capacités de transmission, de stockage et/ou de traitement d'informations numériques.

Cet outil comprend notamment un gestionnaire de ressources associé à un stockage de données décrivant les capacités des différents équipements du réseau, ou données de situation de ressources. Ce stockage est agencé selon une structure de données dans laquelle un identifiant était mis en relation avec des valeurs datées de grandeurs quantitatives.

Le gestionnaire de ressources enregistre certains au moins des équipements du réseau en tant que ressources dans le stockage de données de situation avec, comme identifiant, un identifiant d'équipement, et comme valeur datée de grandeurs quantitatives, une première suite de valeurs datée de capacités de transmission, de stockage et/ou de traitement définissant une capacité globale exploitable de la ressource, et une ou plusieurs suites de valeurs datées de capacité de transmission, de stockage et/ou de traitement définissant des capacités de ressources temporairement attribuées. Ces suites de valeurs prennent la forme de ce que l'on a appelé des profils temporels de capacité, qui peuvent être relatifs à des capacités réservées, maximales, attribuable, etc.

On a également décrit un sélecteur de ressources, à usage par exemple dans cet outil d'aide à l'exploitation d'un réseau, comprenant un premier outil de sélection adapté pour retourner un sous-ensemble d'identifiants de ressources sélectionnées dans le stockage de données selon des données d'identification fonctionnelle, un second outil de sélection adapté pour retourner un sous-ensemble d'identifiants de ressources sélectionnées dans un stockage de données selon des données de localisation géographique tirées de la requête en réservation, un troisième outil de sélection adapté pour retourner un sous-ensemble d'identifiants de ressources sélectionnées dans le stockage de données selon des données d'attributs non fonctionnels tirés de cette requête, un quatrième outil de sélection adapté pour recevoir un sous-ensemble d'identifiants de ressources et pour retourner, d'une part, uniquement ceux des identifiants reçus qui sont maintenus dans un stockage de données de liaison en tant que second ou troisième identifiant de ressources en relation avec un premier identifiant de ressources et, d'autre part, chacun des premiers identifiants en question.

Il s'agit là d'une configuration particulièrement avantageuse du sélecteur de ressources, comprenant un ensemble de fonctions de sélection opérant sur des critères différents les uns des autres. Le sélecteur de ressources peut ne comprendre que certaines seulement de ces fonctions de sélection.

On a encore décrit un outil de planification adapté pour évaluer une condition d'acceptation à partir d'expressions de comparaison de dates qui portent sur une capacité fonctionnelle datée et sur les suites datées de capacité de transmission, de stockage et/ou de traitement maintenue en relation d'un ou plusieurs identifiants de ressources. Cet outil de planification est ainsi capable de vérifier si une ressource peut être réservée, autrement dit, si son profil de capacité autorise une réservation et dans quelles conditions.

On a en outre décrit un allocateur de ressources agencé pour recevoir une requête identifiée de réservation temporaire de capacité fonctionnelle comprenant un jeu daté de données fonctionnelles et pour y répondre en appelant le sélecteur de ressources pour chaque donnée fonctionnelle de la requête, en appelant l'outil de planification pour certains au moins des identifiants du sous-ensemble retourné par le sélecteur de ressources, et en retournant finalement un ensemble d'identifiants de ressources en tant que réponse à la requête de réservation.

On a également décrit un gestionnaire d'infrastructures virtuelles qui est associé à un second stockage de données de situations et d'infrastructures virtuelles. Ce second stockage de données est agencé selon une seconde structure de données dans laquelle un identifiant est mis en relation avec des valeurs datées de grandeurs quantitatives.

Le gestionnaire d'infrastructures virtuelles est adapté pour enregistrer des unités virtuelles dans le second stockage de données, avec, comme identifiant, un identifiant de l'unité et, comme valeur datée de grandeur quantitative, une seconde suite de valeurs datées de capacités de traitement, de stockage et/ou de transmission de l'unité virtuelle définissant une capacité globale exploitable de l'unité, sous la forme d'un profil de capacité. Ce gestionnaire d'infrastructures virtuelles est en outre associé à une troisième structure de données, dans laquelle un identifiant d'unité virtuelle est associé à un groupe d'identifiants de ressources et, par là, aux suites de valeurs datées de capacités correspondantes.

Les première, seconde et troisième structures de données définissent ainsi conjointement un objet d'infrastructures virtuelles en correspondance d'un identifiant d'unités virtuelles, pour certains au moins de ces identifiants tout en maintenant une correspondance entre les première et seconde suites de valeurs datées de capacités de traitement, de stockage et/ou de transmission, c'est-à-dire notamment entre les profils de capacités des éléments de l'infrastructure virtuelle, ceux de l'infrastructure elle-même et surtout ceux des équipements du réseau, ou ressources physiques.

Un gestionnaire de réseau est chargé de maintenir des droits et des capacités pour les usagers en fonction du temps.

Le gestionnaire d'infrastructures virtuelles est agencé pour reconfigurer dynamiquement des objets d'infrastructures virtuelles en fonction des droits et capacités demandés, ensuite par exemple de requête de reprovisionnement ou de réservation.

Toute opération de reconfiguration d'une infrastructure virtuelle comprend une opération de reconfiguration du contenu de la troisième structure de données associée à l'objet d'infrastructure virtuelle et/ou une reconfiguration du contenu de la première structure de données visées dans l'objet d'infrastructures virtuelles. Ceci permet de gérer l'infrastructure virtuelle en correspondance d'une pluralité de graphes temporels de capacité de traitement et/ ou de transmission des équipements physiques constitutifs du réseau exploité.

On a aussi décrit un contrôleur d'équipement capable de faire opérer un équipement physique conformément à un jeu de paramètres de fonctionnement et un stockage de données agencées selon une structure qui met en relation un identifiant pour cet équipement physique et, d'une part, un jeu de valeurs datées d'attributs, et, d'autre part, une liste de fonctions de commandes capables de modifier certains au moins des paramètres de fonctionnement du contrôleur.

Un interpréteur est adapté pour recevoir en même temps une donnée d'identifiant d'équipement et un paramètre d'horizon temporel, et pour y répondre en établissent une suite d'événements respectifs à partir des informations du stockage de données concernées par l'horizon temporel, que l'on a appelé série temporelle d'événements, chaque événement mettant en relation une date, un ou plusieurs identifiants de fonctions de commande et un jeu de paramètres pour ces fonctions, établi d'après une valeur datée d'attributs.

Le contrôleur, l'interpréteur et le séquenceur fonctionnement conjointement pour mettre en oeuvre un processus "infini", du moins à l'échelle de vie du système, qui, au moins pour les parties de ces éléments s'exécutant sur les ressources, s'exécutent en arrière-plan.

Chaque gestionnaire d'infrastructure physique en combinaison d'un ou plusieurs actionneurs, agencés sur l'équipement lui-même ou à distance, le cas échéant partiellement, agit comme un séquenceur qui appelle l'interpréteur et réalise chronologiquement les appels des fonctions de chaque événement de la suite tels que retournés par l'interpréteur. Ceci permet de piloter, de commander, de contrôler, d'automatiser, de programmer et/ou de séquencer l'équipement à distance. L'appel de l'interpréteur peut néanmoins se faire de manière programmée, à intervalles de temps prédéfinis, ou de manière systématique, dès qu'un changement s'est opéré dans le profil temporel d'un équipement physique.

L'outil d'aide à l'exploitation peut contenir toute combinaison des éléments fonctionnels décrits ci-dessus entre eux, lorsque ces éléments sont compatibles entre eux.

L'outil proposé utilise une représentation logique de la capacité fonctionnelle physique de tout dispositif technique composant un réseau, en particulier un réseau étendu tel qu'Internet. Chaque dispositif technique est considéré comme une "ressource" du réseau. Et cette ressource peut être virtualisée, c'est-à-dire héberger plusieurs ressources, en général présentant une fonction principale identique en donnant l'impression à tout utilisateur que la ressource virtuelle qu'il utilise est une ressource physique qui lui est propre.

Il a été proprosé un modèle de segmentation logique et dynamique de la capacité fonctionnelle physique individuelle de chacune de ces ressources. Il été également proposé d'établir des séries temporelles glissantes et bornées d'événements de gestion, de configuration et de contrôle de la ressource physique, et ce pour tous types de ressource. Ces profils temporels et séries d'événement aident à la gestion des ressources, en particulier en facilitant les calculs engendrés par les opérations d'attribution de ressources à la suite d'une requête d'un utilisateur.

Il devient possible d'attribuer, ou de dédier, une fraction logique du réseau à une infrastructure du type "best effort" de l'internet actuel. Cette infrastructure peut être offerte en accès public, sans garantie de performance.

L'outil proposé permet à tout propriétaire d'un équipement informatique doté de capacités de traitement, de communication ou de stockage d'insérer cet équipement de manière dynamique, flexible et réversible dans un vaste réservoir global de ressources que constitue l'Internet, de segmenter dynamiquement les capacités fonctionnelles de cette ressource, et de choisir à quels usages sont destinées les sous-capacités fonctionnelles isolées.

Tout opérateur d'une ressource ou d'une collection de ressources telle qu'un réseau, une grappe d'ordinateurs ou un centre de données peut gérer et configurer, dynamiquement et de manière flexible, ses ressources, à distance, ou leur transmettre des valeurs de seuil permettant une gestion et une configuration autonomes. Il permet un suivi rigoureux, une comptabilité simple et des analyses statistiques précises des usages des ressources suivant deux grandeurs, à savoir le temps et la capacité, et de manière plus générale, le temps et tout attribut qui peut être associé à un équipement physique. Ceci permet d'établir des calculs de coût et de dimensionnement efficaces de capacités individuelles.

L'outil proposé permet encore une valorisation équitable des investissements d'infrastructures en donnant de la valeur ajoutée à l'ensemble du contenant, tels que les espaces de stockage ou les capacités d'acheminement et non plus seulement au traitement, et à l'acheminement du contenu comme cela est le cas dans l'internet actuel.

Cet outil peut permettre une transformation progressive de l'Internet actuel vers un Internet du futur en offrant un service de connectivité universelle, davantage de capacités de services, et des services d'infrastructures à la demande, de hautes capacités et à qualité garantie. L'outil utilise un modèle de représentation temporelle que l'on peut qualifier de "à grains fins" des capacités du réseau. Ceci offre un contrôle, une gestion et une valorisation dynamiques des ressources du réseau en général et de l'Internet en particulier qui permettent d'assurer l'ajustement global de ces ressources aux conditions environnementales et aux besoins réels.

L'outil proposé est adapté à tout équipement mettant en oeuvre une couche quelconque d'abstraction réseau (1, 2 et 3) de l'Internet actuel ainsi que des mécanismes modernes de virtualisation des ressources informatiques. Il est possible de réutiliser tous les protocoles et logiciels existant, mais également d'utiliser de nouveaux protocoles réseau, de transport et applicatifs qui pourraient se révéler plus efficaces et mieux adaptés aux nouvelles applications.

Tout fabricant de composants informatiques ou de communication peut donner une représentation logique de la capacité de l'équipement qu'il fabrique et ainsi permettre sa gestion et sa configuration dynamique et flexible à distance, grâce à des protocoles standards tels que Netconf ou même de manière autonome.

L'outil permet ainsi d'exploiter avantageusement les mécanismes de configurations dynamiques et les plans de contrôle développés ces dernières années dans les réseaux optiques et tes réseaux à paquets tels que GMPLS/ASON, MEF, MTOSI notamment.

L'outil permet surtout le partage de ressources entre différents usagers ayant des contraintes et des intérêts différents les uns des autres. Certains usagers ont besoin de garanties en temps réel ou en avance, tandis que d'autres sont incapables de prévoir de tels besoins ou n'en ont pas l'utilité. Ceci se fait en offrant à l'opérateur ou au propriétaire de la ressource physique la possibilité de valoriser les ressources de son infrastructure au mieux.

L'outil proposé est basé sur une représentation du temps continue (temps universel) qui le différencie grandement d'autres propositions dans le domaine desquelles on manipule un temps dit en "slots" ou en "tranches de temps" en français.

L'outil n'a pas l'obligation d'utiliser des valeurs discrètes de capacité. Cela permet ainsi d'obtenir des solutions calculables en temps polynomial, ce qui s'avère très avantageux, en particulier lors des calculs d'allocation de ressources ensuite de requêtes d'usagers.

L'outil permet, en outre, de découper logiquement et dynamiquement une infrastructure informatique physique distribuée en sous-infrastructures contrôlées indépendamment les unes des autres et potentiellement isolées. Il diversifie et accroît ainsi la valorisation des infrastructure distribuées en offrant une solution de qualité, de service et de sécurité à des usagers prêts à en payer le prix.

Selon un autre aspect, l'outil proposé permet de décider du lieu et du calendrier d'enracinement d'une infrastructure informatique privée virtuelle au sein d'une infrastructure physique publique et distribuée géographiquement. Il permet d'accélérer le processus de décision d'allocation des ressources en procédant à des restrictions successives de l'espace des solutions.

L'invention n'est pas limitée aux modes de réalisation décrits ci-dessus, à titre d'exemple uniquement mais englobe toutes les variantes que pourra envisager l'homme de l'art. En particulier, on a décrit un système fonctionnant de manière optimale. En pratique, pour que ce système fonctionne à minima, il suffit que le gestionnaire VIM500 et chaque gestionnaire PIM200-I maintiennent un objet VPXI pour chaque sous-infrastructure virtuelle, un objet de type VXNOD pour chaque noeud virtuel et un objet "substrate node" pour chaque équipement physique du réseau. Le système fonctionne alors dans un mode dégradé sans gestion de son réseau.

Pour que le système fonctionne néanmoins avec un réseau géré, il convient de maintenir en outre un objet VXlink pour chaque liaison virtuelle entre noeuds virtuels et un objet "substrate link" pour chaque lien physique du réseau.

On a décrit qu'une ressource physique, noeud ou lien, pouvait servir de base à une ou plusieurs ressources virtuelles selon la nature de l'équipement physique en question. Il faut comprendre que plusieurs ressources physiques peuvent également être assemblées pour ne former qu'un seul noeud virtuel et que de la même manière plusieurs noeuds virtuels peuvent être assemblés pour ne former qu'un seul et même noeud virtuel géré de manière unique.

Les gestionnaires VIM500 et PIM200-I ont été décrits quant à leurs propriétés fonctionnelles au sein du système. On doit comprendre que toute implémentation de ces fonctions, quelle qu'en soit la forme, entre dans la cadre de la présente demande. Ces gestionnaires peuvent être, complètement ou en partie, centralisés ou distribués, en particulier selon les configurations et les possibilités des équipements disponibles au sein des infrastructures.

L'outil proposé permet de gérer de manière unifiée, généralisée et combinée l'ensemble des ressources du réseau. Toutes ces ressources, quelque soit leur nature, un ordinateur, un routeur et/ou des liens interconnectant ces ressources, à tous les niveaux de contrôle et de gestion sont traités de manière homogène. Finalement, il est fait abstraction des éléments physiques pour faire disparaître toutes les frontières entre eux.

La présente invention vise également le code logiciel qu'elle peut faire intervenir, tout particulièrement lorsqu'il est mis à disposition sur tout support lisible sur un ordinateur. L'expression "support lisible par ordinateur" couvre un support de stockage, par exemple magnétique ou optique, aussi bien qu'un moyen de transmission, tel qu'un signal numérique ou analogique, transitant par un lien matériel ou par voie d'ondes.

L'outil d'aide à la gestion d'un équipement physique communiquant selon l'invention permet, grâce au contrôleur d'équipement, de programmer et/ou de commander directement le fonctionnement de l'équipement physique et/ou de le reconfigurer, en fonction notamment des événements établis dans le temps par l'interpréteur. L'équipement physique est donc piloté en fonction du temps : ses paramètres de contrôle et/ou de configuration sont programmés en fonction du temps.

Suivant les modes de réalisation, l'outil d'aide à la gestion d'un équipement physique est, en partie ou en totalité, mutualisé pour plusieurs équipements ou au contraire dédié à un équipement. Les éléments le constituant sont, suivant les modes de réalisation intégrés en totalité ou en partie, à l'équipement ou au contraire sont distincts de l'équipement.

Dans un mode de réalisation, un profil temporel est donc établi pour chaque équipement.

Par ailleurs, les ressources physiques (les équipements physiques) et/ou virtuelles (ie une part d'équipement physique partagé dans le temps et/ou dans sa capacité) sont coordonnées entre elles, via un coordinateur centralisé et/ou par coordination entre les outils d'aide à la gestion des équipements physiques et/ou par coordination entre les ressources directement. Des interactions peuvent ainsi avoir lieu entre les équipements, influant sur la programmation de leur fonctionnement ou directement leur fonctionnement.

Par exemple, dans un mode de réalisation, une ressource de stockage étant associée à une ressource de transmission pour une opération planifiée lors d'une période déterminée, les événements correspondant étant établis par les interpréteurs, si la ressource de stockage et/ou le contrôleur de son outil d'aide à la gestion, détecte, suite à des interactions entre la ressource de stockage et la ressource de transmission, une augmentation du débit de transmission pour la ressource de transmission par rapport à la programmation initiale, soit pendant l'opération elle-même, soit avant, la ressource de stockage et/ou son outil d'aide à la gestion déclenche une programmation correspondante de la ressource de stockage.

Dans un mode de réalisation, la ressource opérée par le contrôleur d'équipement de l'outil d'aide à la gestion associé est en outre capable d'adapter son fonctionnement et le modifier par rapport aux pilotage du contrôleur d'équipement suite à une interaction avec une autre ressource et/ou l'apparition d'une consigne locale à la ressource (par exemple, le dépassement d'un seuil de charge, seuil d'erreurs etc).

Cette interaction avec une autre ressource correspond par exemple à une reconfiguration commandée pour augmenter la taille d'un espace de stockage, par une ressource de type "lien" qui détecte une augmentation du nombre de pertes de paquets à son extrémité de sortie, au niveau de laquelle se trouve l'espace de stockage.

La consigne locale correspond par exemple à doubler la capacité du lien si son taux d'utilisation dépasse 80% ou diminuer l'espace mémoire de 30% du serveur virtuel si son taux d'utilisation est inférieur à 10% etc. Les consignes peuvent être relatives ou absolues, de même que les seuils.

### Annexe 1 - Structures de données

### A.1.1 - Types d'objets

| **A.1.1.1** | ***F*** | **type fenêtre temporelle** |
|---|---|---|
| *Structure* | *F={d,h},* avec | |
| | *d :* date de début de la fenêtre, en temps universel | |
| | *h :* horizon de la fenêtre temporelle, exprimé en millisecondes | |

| A.1.1.2 | ***R*** | **type ressource de manipulation de l'information** |
|---|---|---|
| *Structure* | *R* = *{URI, CBID, type_r, classe_c, unit_c, param*_*e*, *tmin, cgranul, nb_grainmax, nb_profilmax, nb_evt_max},* avec | |
| | *URI*: nom universel | |
| | *CBID :* identifiant cryptographique unique | |
| | *type_r :* type de ressource, voir l'ensemble *Rt* | |
| | *classe_c :* classe de capacité principale, voir l'ensemble *Ct* | |
| | *unit_c ;* unité capacité, voir objet Uc | |
| | *param_e:* liste de prototypes de fonctions de capacité déclenchées sur événement capacité | |
| | *tmin :* durée minimal entre deux événements de capacité de la ressource | |
| | *cgranul :* granularité minimale d'un fragment de capacité exprimé en unité capacité *unit_c* | |
| | *nb_grainmax* : nombre max de grains gérés pour la ressource | |
| | *nb_profilmax :* nombre max de profils gérés pour la ressource | |
| | *nb_evt_max:* nombre max de d'événement gérés par fenêtre temporelle | |
| *Comment*. | La manipulation d'informations comprend la transmission et le traitement de cette information | |

| A.1.1.3 | ***Ek*** | **type événement de capacité** |
|---|---|---|
| | pour une ressource *r*, dont la capacité se mesure en *unit_c* | |
| *structure* | *Ek*(*r*)={*tk*, *type_Ek, ck(r), actions_Ek(r)} avec* | |
| | *tk :* date exprimée en temps universel et comprise dans la fenêtre *F* | |

| | |
|---|---|
| | *type_Ek* : type d'événement parmi *{cap_provisioning, cap_renting)* |
| | *ck: ck :* capacité exprimée en unité *unit_c* de la ressource *R* |
| *action_Ek(r)* : | *action_Ek(r):* liste d'actions et paramètres associés à l'événement *Ek(r)* activés à la date tk en fonction du type d'événement |
| *comment.* | Pour la ressource *R,* la date *tk* sert d'index pour la recherche et la réalisation des événements. |

| A.1.1.4 | ***Se*** | **type série d'événements de capacité** pour une ressource *r* |
|---|---|---|
| *structure* | *Se (r,F)* = *{ek(r), k entier dans 0, n-1}* | |
| | o où *ek* est un événement de capacité et a valeur dans *F*, | |
| | o où *n* est borné par *nb_evt_max(r)* | |
| | o où *tk*+*1 - tk ≥ tmin(r)* | |
| *comment.* | *tmin(r)*: il y a un temps minimal, spécifique à chaque ressource, à respecter entre deux événements de capacité | |

| A.1.1.5 | ***Ne*** | **type nombre d'événements** |
|---|---|---|
| | d'une série d'événements de capacité | |
| *structure* | *Ne* = *cardinal* (*Se(r))* | |

| A.1.1.6 | ***profil (t,r,F)*** | **type profil de capacité** |
|---|---|---|
| *structure* | *profil* (*t, r, F) = c0* +*el hel(t)* + *c2 he2 (t)* + *c3 he 3(t*)+ ... + *cn-1 hen-1(t)* | |
| | o où *ci* est exprimé en unité de capacité de la ressource *r* | |
| | o *où ci* = *m x cgranul(r) avec m entier* | |
| | o où *n* est borné | |
| | o où *hei* = *1 si t dans [ti, ti* + *1[, 0 sinon* | |
| | o où *test dans F* | |

| A.1.1.7 | ***PHI(r, F)*** | **type fragment de capacité** |
|---|---|---|
| *structure* | *PHI(r, Se)* = *Σci (ti* + *1- ti)* | |
| | o *où ci et ti sont associés à l'événement ei de Se(r, F)* | |
| | o *où i est un entier à valeur dans [0, Ne-1].* | |

| A.1.1.8 | ***R_PROFIL (t, r,F)*** | **type profil général de ressource** |
|---|---|---|
| *structure* | *R_PROFIL (t,r,F) ={Cmax(t*, *r,F), Cbe(t,r,F), Cexpo(t,r,F)}* | |
| | o *où Cmax(t,r,F) est le profil englobant de la capacité de la ressource r, pour la fenêtre temporelle F.* | |
| | o *où Cbe (t, rF) est le profil de la capacité, best-effort agrégée de la ressource r, alloué* à *un service correspondant à l'Internet traditionnel, pour la fenétre temporelle F.* | |
| | o *On appelle Cexpo(t, r, F) le profil exposé de la capacité résiduelle de la ressource r, non allouée à l'Internet traditionnel, non gardée en réserve et exposée à la réservation, pour la fenêtre temporelle F.* | |

| A.1.1.9 | *RESA_PROFIL (r,F (t, r F)* | **type profil réservé de ressource** |
|---|---|---|
| *structure* | *RESA*_*PROFIL* (*t*,*r, F)* =*{ Cj(t, r,F), j entier dans [0, m-1]}* | |
| | *o où m est borné par nb_profilmax* | |

### A.1.2 Propriétés

| A.1.2.1 | **fragmentabilité d'une capacité** *c* **de** ressource *r* de profil *R_PROFIL* |
|---|---|
| | o S'il est possible de définir un profil de capacité (ou, par abus de langage, sous-capacité) tel que ; *profil (t, r, F) < Cmax(t, r, -*) pour au moins une fenêtre temporelle *F.* |
| | o La relation < des profils, étant définie par *profil1* (*t*, *r, F) < profil2 (t, r, F)* pour tout *t* dans *F* |
| | o Une condition nécessaire est que *nb_profilmax > 1, nb_grainmax > 1* et *cgranul < - Cmax(t, r, - )* pour au moins un intervalle *[tk, tk*+*1]* de la vie de la ressource |

| A.1.2.2 | **insolation d'un fragment de capacité PHI(*r*,***F)*. |
|---|---|
| | o Si, pour tout intervalle [*ti, ti*+*1*] de la fenêtre temporelle F, les valeurs *cei* de capacité accessibles effectivement pendant cet intervalle sont telles que |
| | *cei (t)* = *ci* (*t*) *ou cei (ti*+*1-ti) = ci (ti +1- ti)* |
| | o La capacité réservée et effectivement accessible et indépendante de la charge effective du système à l'instant t. (Il n'y a pas d'overbooking ou de congestion constatée pendant l'utilisation). |

### A.1.3 - Ensembles extensibles

| A.1.3.1 | ***Rt*** | **Types de ressource de traitement de l**'**information** |
|---|---|---|
| *exemple* | *Rt = {élément de calcul, élément de stockage, élément de visualisation, élément de détection, élément de transit, élément de transmission, ...}* | |

| A.1.3.2 | ***F*** | **Types de fonction élémentaire de manipulation de l**'**information** |
|---|---|---|
| *exemple* | *F = {transforming, storing, outputting, inputting, routing, transferring ...}* | |

| A.1.3.3 | ***Cp*** | **classe de capacités physiques** |
|---|---|---|
| *exemple* | *Cp* = *{processing capacity, disk space, bandwidth*, *set of lambdas*, *set of processing core, ...}* | |
| *comment.* | o Peut être divisé en un nombre non nécessairement borné et fini de fragments de capacité variable. | |
| | o Est associé à une unité de capacité mesurable de type réel, rationnel ou entier et qui n'est pas un label logique. | |
| | o Une capacité physique est isolée en performance. | |

| A.1.3.4 | ***Cl*** | **Classes de capacités logiques** |
|---|---|---|
| *exemple* | *Cl = {ensemble de machines virtuelles, ensemble de liens virtuels, ensemble d'écrans virtuels,...}* | |
| *comment* | o Peut être segmenté en un nombre fini et bornés d'unités logiques. | |
| | o Est associé à une unité de capacité *U_c* entière ou booléenne, nommée "logical label". | |
| | o Une unité de capacité logique est non isolée en performance. | |

| A.1.3.5 | *C* | **Capacités de manipulation de l**'**information** |
|---|---|---|
| *exemple* | *C* = *Cp U Cl* | |
| *comment.* | La manipulation d'informations comprend la transmission et traitement d'informations. | |

| A.1.3.6 | ***U_c*** | **Unités de capacité** |
|---|---|---|
| *exemple,* | *U_c* = {*Hertz*, *Bit*/*seconde*, *Byte, frame*/*seconde, logical label, ...}* | |

### Annexe 2 - Fonctions

| A.2.1 | *location()* |
|---|---|
| Description | Retourne un attribut de localisation d'une ressource physique ou virtuelie. |

| A.2.2 | *Latencymax()* |
|---|---|
| Description | Retourne une valeur maximale de latence d'une ressource physique ou virtuelle. |

| A.2.3 | *latencymin()* |
|---|---|
| Description | Retourne une valeur minimale de latence d'une ressource physique ou virtuelle, |

| A.2.4 | *bandwidthmax()* |
|---|---|
| Description | Retourne une valeur maximale de bande passante d'une ressource physique ou virtuelle. |

| A.2.5 | *bandwidthmin()* |
|---|---|
| Description | Retourne une valeur minimale de bande passante d'une ressource physique ou virtuelle. |

| A.2.6 | *function()* |
|---|---|
| Description | Retourne une liste de fonctionnalités identifiées associé à un composant (individuel ou de groupe). |

| A.2.7 | *start()* |
|---|---|
| Description | Retourne une valeur de date de début de disponibilité pour un composant. |

| A.2.8 | *end()* |
|---|---|
| Description | Retourne une valeur de date de fin de disponibilité pour un composant. |

| A.2.9 | *cpumax* |
|---|---|
| Description | Retourne une valeur maximale de capacité processeur pour un composant physique ou virtuel. |

| A.2.10 | *cpumin()* |
|---|---|
| Description | Retourne une valeur minimale de capacité processeur pour un composant physique ou virtuel. |

| A2.11 | *rammax()* |
|---|---|
| Description | Retourne une valeur maximale de capacité de mémoire vive pour un composant physique ou virtuel. |

| A.2.12 | *rammin()* |
|---|---|
| Description | Retourne une valeur minimale de capacité de mémoire vive pour un composant physique ou virtuel |

| A.2.13 | *hdmax()* |
|---|---|
| Description | Retourne une valeur maximale de capacité de stockage sur disque pour un composant physique ou virtuel. |

| A.2.14 | *hdmin()* |
|---|---|
| Description | Retourne une valeur minimale de capacité de stockage sur disque pour un composant physique ou virtuel. |

| A.2.15 | *sizemax()* |
|---|---|
| Description | Retourne une valeur maximale de taille, en nombre de ressources, pour un composant physique ou virtuel. |

| A.2.16 | *sizemin()* |
|---|---|
| Description | Retourne une valeur minimale de taille, en nombre de ressources, pour un composant physique ou virtuel. |

| A.2.17 | *vmnode()* |
|---|---|
| Description | Retourne un nombre maximal de machines virtuelles qui peuvent être clouées sur une ressource physique. |

| A.2.18 | *allocated()* |
|---|---|
| Description | Retourne un nombre de machines virtuelles allouées sur une ressource physique. |

## Revendications

1. Outil d'aide a la gestion d'un équipement physique communicant possédant des capacités de traitement, de stockage, et/ou de transmission d'informations numériques, comprenant :
- un contrôleur d'équipement (2760, 2770, 2780: 610, 612, 613, 614, 615) capable de faire opérer l'équipement physique conformément à un jeu de paramètres de fonctionnement ;
- un stockage de données (402) agencé selon une structure qui met en relation un identifiant pour l'équipement physique et, d'une part, un jeu de valeurs datées d'attributs, et, d'autre part, une liste de fonctions de commande capables de modifier certains au moins des paramètres de fonctionnement du contrôleur ;
- un interpréteur (914) adapté pour recevoir en même temps une donnée d'identifiant d'équipement et un paramètre d'horizon temporel, et pour y répondre en établissant une suite d'événements respectifs à partir des informations du stockage de données concernées par l'horizon temporel, chaque événement mettant en relation une date, un ou plusieurs identifiants de fonctions de commande et un jeu de paramètres pour ces fonctions, lesdits date, identifiants de fonctions de commande et jeu de paramètres étant établis d'après une valeur datée d'attribut,
- un séquenceur (401 ; 620, 622, 623, 624, 625) agencé pour appeler l'interpréteur et réaliser chronologiquement les appels des fonctions de chaque événement de la suite telle que retournée par l'interpréteur, **caractérisé en ce que** la liste de fonctions de commande comprenant au moins une fonction capable de modifier des données quantitatives de capacité maximale.

2. Outil selon la revendication 1, dans lequel la structure du stockage de données (402) met en relation l'identifiant pour l'équipement physique avec en outre un identifiant unifié de classe fonctionnelle, et dans lequel le jeu de valeurs datées d'attributs comprend un jeu daté de données quantitatives de capacité maximale en rapport avec l'identifiant de classe fonctionnelle.

3. Outil selon la revendication 1 ou 2, dans lequel la structure du stockage de données (402) met en relation l'identifiant pour l'équipement physique avec en outre un identifiant unifié de classe fonctionnelle, dans lequel le jeu de valeurs datées d'attributs comprend un jeu daté de données quantitatives de capacité réservée en rapport avec l'identifiant de classe fonctionnelle, et dans lequel une seconde structure de données (502) met en relation ces données de capacité réservée et un identifiant d'infrastructure réseau.

4. Outil selon l'une des revendications précédentes, dans lequel le jeu de valeurs datées d'attributs comprend des valeurs datées d'attributs non fonctionnels relatifs à la sécurité, la performance, la localisation géographique, au coût monétaire, au coût énergétique de l'équipement, à la propriété, à la fiabilité, et/ou à la surveillance de performances.

5. Outil selon l'une des revendications précédentes, dans lequel l'interpréteur, le séquenceur, et le contrôleur sont reliés à un dispositif de synchronisation.

6. Outil selon la revendication 5, dans lequel le dispositif de synchronisation comprend un élément au moins du groupe formé d'une horloge globale de type GPS, d'un serveur NTP, d'une horloge globale distribuée, construite et resynchronisée à partir d'une source temporelle physique.

7. Outil d'aide à la gestion d'un réseau d'équipements physiques communicants possédant des capacités de traitement, de stockage, et/ou de transmission d'informations numériques, comprenant :
- un contrôleur d'équipement (2760, 2770, 2780: 610, 612, 613, 614, 615) respectif capable de faire opérer l'équipement physique conformément à un jeu de paramètres de fonctionnement ;
- un stockage de données (402) agencé selon une structure qui met en relation un identifiant pour chaque équipement physique et, d'une part, un jeu de valeurs datées d'attributs, et, d'autre part, une liste de fonctions de commande capables de modifier certains au moins des paramètres de fonctionnement du contrôleur de cet équipement ;
- un interpréteur (914) adapté pour recevoir en même temps une donnée d'identifiant d'équipement et un paramètre d'horizon temporel, et pour y répondre en établissant une suite d'événements respectifs à partir des informations du stockage de données concernées par l'horizon temporel, chaque événement mettant en relation une date, un ou plusieurs identifiants de fonctions de commande et un jeu de paramètres pour ces fonctions, établis d'après une valeur datée d'attribut ;
- au moins un séquenceur (401; 620, 622, 623, 624, 625) agencé pour appeler l'interpréteur et réaliser chronologiquement les appels des fonctions de chaque événement de la suite telle que retournée par l'interpréteur, **caractérisé en ce que** la liste de fonctions de commande comprenant au moins une fonction capable de modifier des données quantitatives de capacité maximale.

8. Outil selon la revendication 7, dans lequel le stockage de données (402) est commun à plusieurs équipements dudit réseau.

9. Outil selon l'une des revendications 7 et 8, dans lequel l'interpréteur (914) est commun à plusieurs équipements dudit réseau.

10. Outil selon l'une des revendications 7 à 9, dans lequel chaque contrôleur (2760, 2770, 2780 : 610, 612, 613, 614, 615) est réalisé au moins en partie sous la forme d'un démon.

## Patentansprüche

1. Werkzeug zur Hilfe der Verwaltung einer kommunizierenden physikalischen Vorrichtung mit Kapazitäten zur Verarbeitung, zum Speichern und/oder zum Übertragen von digitalen Informationen, aufweisend:
- eine Vorrichtungssteuereinrichtung (2760, 2770, 2780: 610, 612, 613, 614, 615), dazu geeignet, die physikalische Vorrichtung konform zu einem Satz von Funktionsparametern arbeiten zu lassen;
- einen Datenspeicher (402), eingerichtet gemäß einer Struktur, die eine Identifikation für die physikalische Vorrichtung und einerseits einen Satz von datierten Attributswerten und andererseits eine Liste von Steuerfunktionen, geeignet zum Modifizieren mindestens bestimmter der Funktionsparameter der Steuereinrichtung, in Relation setzt;
- einen Interpretierer (914), geeignet zum gleichzeitigen Empfangen von Vorrichtungsidentifikationsdaten und einem Zeithorizont-Parameter und zum Reagieren darauf durch Erstellen einer Folge von jeweiligen Ereignissen ausgehend von den durch den Zeithorizont betroffenen Informationen des Datenspeichers, wobei jedes Ereignis ein Datum, ein oder mehrere Steuerfunktionsidentifikationen und einen Satz von Parametern für diese Funktionen in Relation setzt, wobei das Datum, die Steuerfunktionsidentifikationen und der Satz von Parametern aus einem datierten Attributswert erstellt werden,
- eine Ablaufsteuerung (401; 620, 622, 623, 624, 625) eingerichtet, den Interpretierer aufzurufen und die Aufrufe der Funktionen von jedem Ereignis der Folge, wie sie von dem Interpretierer zurückgegeben wird, chronologisch zu realisieren,
dadurch charakterisiert, dass
die Liste von Steuerfunktionen mindestens eine Funktion aufweist, die geeignet ist, quantitative Maximale-Kapazität-Daten zu modifizieren.

2. Werkzeug gemäß Anspruch 1, in dem die Struktur des Datenspeichers (402) die Identifikation der physikalischen Vorrichtung außerdem mit einer vereinheitlichten Funktionelle-Klasse-Identifikation in Relation setzt und in dem der Satz von datierten Attributswerten einen datierten Satz von quantitativen Maximale-Kapazität-Daten im Zusammenhang mit der Funktionelle-Klasse-Identifikation aufweist.

3. Werkzeug gemäß Anspruch 1 oder 2, in dem die Struktur des Datenspeichers (402) die Identifikation der physikalischen Vorrichtung außerdem mit einer vereinheitlichten Funktionelle-Klasse-Identifikation in Relation setzt, in dem der Satz von datierten Attributswerten einen datierten Satz von quantitativen Reservierte-Kapazität-Daten im Zusammenhang mit der Funktionelle-Klasse-Identifikation aufweist und in dem eine zweite Datenstruktur (502) diese Reservierte-Kapazität-Daten und eine Netzwerkinfrastrukturidentifikation in Relation setzt.

4. Werkzeug gemäß einem der vorhergehenden Ansprüche, in dem der Satz von datierten Attributswerten datierte Werte von nicht-funktionellen Attributen in Bezug auf die Sicherheit, die Leistungsfähigkeit, den geographischen Ort, die monetären Kosten, die energetischen Kosten der Vorrichtung, das Eigentum, die Zuverlässigkeit und/oder die Leistungsüberwachung aufweist.

5. Werkzeug gemäß einem der vorhergehenden Ansprüche, gemäß dem der Interpretierer, die Ablaufsteuerung und die Steuereinrichtung mit einer Synchronisationsvorrichtung verbunden sind.

6. Werkzeug gemäß Anspruch 5, in dem die Synchronisationsvorrichtung ein Element mindestens aus der Gruppe, gebildet aus einer globalen Uhr vom Typ GPS, einem NTP-Server, einer globalen verteilten Uhr, gebildet und resynchronisiert ausgehend von einer physikalischen Zeitquelle, aufweist.

7. Werkzeug zur Hilfe der Verwaltung eines Netzwerks von kommunizierenden physikalischen Vorrichtungen mit Kapazitäten zur Verarbeitung, zum Speichern und/oder zum Übertragen von digitalen Informationen, aufweisend:
- eine Vorrichtungssteuereinrichtung (2760, 2770, 2780: 610, 612, 613, 614, 615) jeweils dazu geeignet, die physikalische Vorrichtung konform zu einem Satz von Funktionsparametern arbeiten zu lassen;
- einen Datenspeicher (402), eingerichtet gemäß einer Struktur, die eine Identifikation für jede physikalische Vorrichtung und einerseits einen Satz von datierten Attributswerten und andererseits eine Liste von Steuerfunktionen, geeignet zum Modifizieren mindestens bestimmter der Funktionsparameter der Steuereinrichtung und dieser Vorrichtung, in Relation setzt;
- einen Interpretierer (914), geeignet zum gleichzeitigen Empfangen von Vorrichtungsidentifikationsdaten und einem Zeithorizont-Parameter und zum Reagieren darauf durch Erstellen einer Folge von jeweiligen Ereignissen ausgehend von den durch den Zeithorizont betroffenen Informationen des Datenspeichers, wobei jedes Ereignis ein Datum, ein oder mehrere Steuerfunktionsidentifikationen und einen Satz von Parametern für diese Funktionen, erstellt aus einem datierten Attributswert, in Relation setzt;
- mindestens eine Ablaufsteuerung (401; 620, 622, 623, 624, 625) eingerichtet, den Interpretierer aufzurufen und die Aufrufe der Funktionen von jedem Ereignis der Folge, wie sie von dem Interpretierer zurückgegeben wird, chronologisch zu realisieren,
dadurch charakterisiert, dass
die Liste von Steuerfunktionen mindestens eine Funktion aufweist, die geeignet ist, quantitative Maximale-Kapazität-Daten zu modifizieren.

8. Werkzeug gemäß Anspruch 7, in dem der Datenspeicher (402) mehreren Vorrichtungen des Netzwerks gemeinsam ist.

9. Werkzeug gemäß einem der Ansprüche 7 und 8, in dem der Interpretierer (914) mehreren Vorrichtungen des Netzwerks gemeinsam ist.

10. Werkzeug gemäß einem der Ansprüche 7 bis 9, in dem jede Steuereinrichtung (2760, 2770, 2780: 610, 612, 613, 614, 615) mindestens teilweise in der Form eines Dämons realisiert ist.

## Claims

1. A tool for aiding the management of communicating physical equipment having processing, storage and/or digital data transmission capacities, comprising:
- an equipment controller (2760, 2770, 2780; 610, 612, 613, 614, 615) capable of causing the physical equipment to operate in conformity with a set of operating parameters;
- a data storage (402) arranged in a structure which relates an identifier for the physical equipment firstly with a set of dated attribute values and secondly with a list of command functions capable of modifying at least some of the operating parameters of the controller;
- an interpreter (914) adapted to receive at the same time equipment identifier data and a time horizon parameter, and to respond thereto by determining a sequence of respective events from information drawn from the storage of data concerned by the time horizon, each event interrelating a date, one or more identifiers of command functions and a set of parameters for these functions, said date, identifiers of command functions and set of parameters being determined on the basis of a dated attribute value;
- a sequencer (401; 602, 622, 623, 624, 625) arranged to call the interpreter and chronologically to call the functions of each event of the sequence such as returned by the interpreter, **characterized in that**
the list of command functions comprises at least one function capable of modifying maximum capacity quantitative data.

2. The tool according to claim 1, wherein the said data storage structure (402) relates the identifier for the physical equipment also with a unified functional class identifier, and wherein the set of dated attribute values comprises a dated set of maximum capacity quantitative data in relation to the functional class identifier.

3. The tool according to claims 1 or 2 wherein the data storage structure (402) relates the identifier for the physical equipment also with a unified functional class identifier, wherein the set of dated attribute values comprises a dated set of reserved capacity quantitative data in relation to the functional class identifier, and wherein a second data structure (502) relates these reserved capacity data with a network infrastructure identifier.

4. The tool according to one of the preceding claims wherein the set of dated attribute values comprises non-functional dated attribute values relating to security, performance, geographical location, financial cost, energy cost of the equipment, ownership, reliability and/or performance monitoring.

5. The tool according to one of the preceding claims wherein the interpreter, the sequencer and the controller are linked to a synchronization device.

6. The tool according to claim 5 wherein the synchronization device comprises an element at least from the group formed by a global clock of GPS type, a NTP server, a global distributed clock built and resynchronized from a physical time source.

7. The tool for aiding the management of a network of communicating physical equipment having processing, storage and/or digital data transmission capacities, comprising:
- a respective equipment controller (2760, 2770, 2780; 610, 612, 613, 614, 615) capable of causing the physical equipment to operate in conformity with a set of operating parameters;
- a data storage (402) arranged in a structure which relates an identifier for each item of physical equipment firstly with a set of dated attribute values and secondly with a list of command functions capable of modifying at least some of the operating parameters of the controller of this equipment;
- an interpreter (914) adapted to receive at the same time equipment identifier data and a time horizon parameter, and to respond thereto by determining a sequence of respective events from information drawn from the storage of data concerned by the time horizon, each event interrelating a date, one or more identifiers of command functions and a set of parameters for these functions, determined on the basis of a dated attribute value;
- at least one sequencer (401; 602, 622, 623, 624, 625) arranged to call the interpreter and chronologically to call the functions of each event of the sequence such as returned by the interpreter, **characterized in that**
the list of command functions comprises at least one function capable of modifying maximum capacity quantitative data.

8. The tool according to claim 7 wherein the data storage (402) is common to several items of equipment of the said network.

9. The tool according to one of claims 7 and 8 wherein the interpreter (914) is common to several items of equipment of the said network.

10. The tool according to one of claims 7 to 9 wherein each controller (2760; 2770; 2780; 610, 612, 613, 614, 615) is at least partly in the form of a daemon.
